(19) Europäisches Patentamt
European Patent Office
Office européen des brevets

(11) **EP 4 716 347 A1**

(12) **EUROPEAN PATENT APPLICATION**
published in accordance with Art. 153(4) EPC

(43) Date of publication:
**25.03.2026 Bulletin 2026/13**

(21) Application number: **24806561.7**

(22) Date of filing: **14.05.2024**

(51) International Patent Classification (IPC):
**H04W 72/40** (2023.01)

(52) Cooperative Patent Classification (CPC):
**H04L 5/00; H04W 72/40; H04W 72/54; H04W 72/56**

(86) International application number:
**PCT/CN2024/092963**

(87) International publication number:
**WO 2024/235210 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202310546868**

(71) Applicant: **Datang Mobile Communications
Equipment Co., Ltd.
Beijing 100085 (CN)**

(72) Inventors:
• **YU, Zhe
Beijing 100085 (CN)**
• **REN, Bin
Beijing 100085 (CN)**
• **REN, Xiaotao
Beijing 100085 (CN)**

(74) Representative: **Studio Torta S.p.A.
Via Viotti, 9
10121 Torino (IT)**

(54) **METHOD FOR ADJUSTING TRANSMISSION PARAMETER, COMMUNICATION DEVICE, APPARATUS, AND STORAGE MEDIUM**

(57) Embodiments of the present disclosure provide a method for adjusting a transmission parameter, a terminal, an apparatus, and a storage medium. The method comprises: on the basis of a channel quality parameter and/or a positioning priority of a sidelink, adjusting a transmission parameter of a sidelink positioning reference signal.

Adjusting, based on a channel quality parameter and/or positioning priority of sidelink, transmission parameters of a sidelink positioning reference signal. — 201

FIG. 2

**Description**

CROSS-REFERENCES TO RELATED APPLICATIONS

The present application claims priority to Chinese patent application No. 202310546868.0, filed on May 15, 2023, entitled "Method, Communication Device, Apparatus and Storage Medium for Adjusting Transmission Parameters", which is incorporated herein by reference in its entirety.

FIELD

The present application relates to the field of communication technology, and in particular to a method, terminal, apparatus and storage medium for adjusting transmission parameters.

BACKGROUND

There are two resource allocation ways for sidelink positioning, namely Scheme 1 and Scheme 2. Scheme 1 is used in an in-network coverage scenario, where a network side uniformly allocates time and frequency resources to a sidelink user equipment (UE) for transmitting a sidelink positioning reference signal (SL PRS). Scheme 2 is used in an out-of-network coverage scenario, where the UE autonomously selects the time and frequency resources for transmitting the SL PRS through perception. Meanwhile, there are two types of resource pools for sidelink positioning, namely a dedicated resource pool and a shared resource pool. Resources in the dedicated resource pool are used only for positioning services, while resources in the shared resource pool are used for both positioning services and data communications.
In the resource allocation way of Scheme 2, multiple UEs share the dedicated resource pool/shared resource pool, which increases the probability of channel congestion and cause the time and frequency resources used by multiple UEs to transmit SL PRSs to collide, causing SL PRSs of UEs to interfere with each other and affecting the sidelink positioning accuracy for UEs.

BRIEF SUMMARY

To address the above-mentioned problems existing in the related art, embodiments of the present application provide a method, terminal, apparatus and storage medium for adjusting transmission parameters.
In a first aspect, an embodiment of the present application provides a method for adjusting transmission parameters, including: adjusting, based on a channel quality parameter and/or positioning priority of sidelink, transmission parameters of a sidelink positioning reference signal.
In some embodiments, the method further includes:
determining the channel quality parameter of the sidelink.
In some embodiments, determining the channel quality parameter of the sidelink includes:

determining, based on a channel quality parameter corresponding to the sidelink positioning reference signal, the channel quality parameter of the sidelink; or
determining, based on a channel quality parameter corresponding to the sidelink positioning reference signal and a channel quality parameter corresponding to other signals transmitted in a same slot as the sidelink positioning reference signal, the channel quality parameter of the sidelink.

In some embodiments, the other signals transmitted in the same slot as the sidelink positioning reference signal include one or more of:

a signal carried by physical sidelink control channel (PSCCH);
a signal carried by physical sidelink shared channel (PSSCH); or
a signal carried by physical sidelink feedback channel (PSFCH).

In some embodiments, determining the channel quality parameter of the sidelink includes:

determining, based on a channel quality parameter measured by the terminal itself and a channel quality parameter measured and shared by other terminals except the terminal itself, the channel quality parameter of the sidelink;
determining, based on a channel quality parameter measured and shared by other terminals except the terminal itself, the channel quality parameter of the sidelink; or
receiving the channel quality parameter of the sidelink transmitted by a third-party device, where the channel quality parameter of the sidelink is determined based on a channel quality parameter measured and shared by each terminal.

In some embodiments, the method further includes:

determining the positioning priority,
where determining the positioning priority includes:

in case that a type of a resource pool used for sidelink positioning services is a dedicated resource pool, determining that the positioning priority is first priority information; or
in case that a type of a resource pool used for sidelink positioning services is a shared resource pool, determining that the positioning priority is second priority information for communication services, determining that the positioning priority is third priority information for positioning services, or determining that the positioning priority is fourth priority information for both communication services and positioning services.

In some embodiments, in case that the type of the resource pool is the shared resource pool, adjusting the transmission parameters of the sidelink positioning reference signal based on the positioning priority includes:

determining that the positioning priority is the fourth priority information, and adjusting the transmission parameters of the sidelink positioning reference signal based on the fourth priority information; or
determining that the positioning priority is the second priority information or the third priority information based on higher layer indication information, and adjusting the transmission parameters of the sidelink positioning reference signal based on the determined positioning priority.

In some embodiments, the channel quality parameter of the sidelink includes one or more of a channel busy rate (CBR), a channel occupancy rate (CR), or a sidelink received signal strength indicator (SL RSSI).
In some embodiments, the transmission parameters of the sidelink positioning reference signal include one or more of:

a resource pattern of the sidelink positioning reference signal;
a resource identifier of the sidelink positioning reference signal;
a transmission period for periodically transmitting the sidelink positioning reference signal;
a number of orthogonal frequency division multiplexing (OFDM) symbols occupied by the sidelink positioning reference signal;
a comb size corresponding to the sidelink positioning reference signal;
a transmission power or maximum transmission power for transmitting the sidelink positioning reference signal;
a CR limit; or
a subchannel for transmitting the sidelink positioning reference signal.

In some embodiments, in an out-of-coverage scenario, in case that the sum of CRs corresponding to positioning priorities with values from 1 to i is less than or equal to a CR corresponding to a positioning priority with a value of $k$, the CR limit is the CR corresponding to the positioning priority with a value of $k$, where the value of $i$ is less than or equal to the value of $k$.
In some embodiments, the CR limit satisfies the following calculation formula:

$$\sum_{i \leq k} CR(i) \leq CR_{limit}(k)$$

where $CR_{limit}(k)$ is the CR limit measured for a sidelink transmission with a positioning priority $k$ and a slot (n-N), $CR(i)$ is a CR corresponding to a sidelink transmission with a positioning priority i measured for a slot (n-N), n represents a slot or subframe, N is associated with a subcarrier spacing, and both n and N are integers.
In some embodiments, in an out-of-coverage scenario, adjusting the transmission parameters of the sidelink positioning reference signal includes:

determining a two-dimensional table configured for the transmission parameters, where the two-dimensional table is associated with a CBR level and the positioning priority; and
adjusting the transmission parameters of the sidelink positioning reference signal based on the two-dimensional table.

In some embodiments, in an in-coverage scenario, adjusting the transmission parameters of the sidelink positioning reference signal includes:

in case that a CBR is less than a first threshold value, or in case that a CBR is greater than a second threshold value, adjusting the transmission parameters of the sidelink positioning reference signal, where the first threshold value is less than the second threshold value.

In some embodiments, the method further includes:
determining a subchannel for transmitting the sidelink positioning reference signal based on one or more of following parameters:

an index of a start physical resource block in physical resource blocks corresponding to resource units to which the sidelink positioning reference signal is mapped;
a number of consecutive physical resource blocks;
a comb size of the subchannel;
an offset of a resource unit; or
a bandwidth of the sidelink positioning reference signal.

In some embodiments, the subchannel includes resource units for transmitting the sidelink positioning reference signal, or the subchannel includes resource units for transmitting the sidelink positioning reference signal and blank resource units.

In a second aspect, an embodiment of the present application provides a terminal, including a memory, a transceiver, and a processor, where the memory is used for storing a computer program, the transceiver is used for transmitting and receiving data under control of the processor, and the processor is used for reading the computer program in the memory and performing the method for adjusting transmission parameters described with respect to the first aspect above.

In a third aspect, an embodiment of the present application provides an apparatus for adjusting transmission parameters, including:
an adjustment unit, used for adjusting, based on a channel quality parameter and/or positioning priority of sidelink, transmission parameters of a sidelink positioning reference signal.

In a fourth aspect, an embodiment of the present application provides a processor-readable storage medium storing a computer program, where the computer program is used for causing a processor to execute the method for adjusting transmission parameters described with respect to the first aspect above.

In a fifth aspect, an embodiment of the present application provides a non-transitory readable storage medium storing a computer program, where the computer program is used for causing a computer to execute the method for adjusting transmission parameters described with respect to the first aspect above.

In a six aspect, an embodiment of the present application provides a communication device-readable storage medium storing a computer program, where the computer program is used for causing a communication device to execute the method for adjusting transmission parameters described with respect to the first aspect above.

In a seventh aspect, an embodiment of the present application provides a chip product-readable storage medium storing a computer program, where the computer program is used for causing a chip product to execute the method for adjusting transmission parameters described with respect to the first aspect above.

The embodiments of the present application provide a method, terminal, apparatus and storage medium for adjusting transmission parameters, which adjusts the transmission parameters of the sidelink positioning reference signal based on the channel quality parameter and/or positioning priority of the sidelink. On one hand, this can ensure that users with relatively high positioning priority can obtain reliable transmission. On the other hand, by adjusting the transmission parameters of the sidelink positioning reference signal, the probability of collision of time and frequency resources for the sidelink positioning reference signal is reduced, interference within the system is reduced, and the sidelink positioning accuracy for UEs is improved.

BRIEF DESCRIPTION OF THE DRAWINGS

In order to clearly illustrate the solutions in the embodiments of the present application or the related art, the accompanying drawings used in the description of the embodiments or the related art are briefly introduced below. It is apparent that the drawings in the following description are only some embodiments of the present application. For those of ordinary skill in the art, other drawings may be obtained based on these drawings without creative effort.

FIG. 1 is a schematic structural diagram of different subchannels for signal transmission according to an embodiment of the present application;

FIG. 2 is a schematic flow chart of a method for adjusting transmission parameters according to an embodiment of the present application;

FIG. 3 is a schematic flow chart of interaction between a transmission terminal and a reception terminal according to an embodiment of the present application;

FIG. 4 is a schematic diagram of correspondence between CBR level configurations and CBR levels according to an embodiment of the present application;

FIG. 5 is a schematic diagram of mapping relationship between CBR levels and positioning priorities in a two-dimensional table according to an embodiment of the present application;

FIG. 6 is a schematic structural diagram of a terminal according to an embodiment of the present application;

FIG. 7 is a schematic structural diagram of an apparatus for adjusting transmission parameters according to an embodiment of the present application.

## DETAILED DESCRIPTION

In order to better describe the solutions in the embodiments of the present application, relevant knowledge is introduced below.

In related art, transmission of the physical sidelink control channel (PSCCH) and the physical sidelink share channel (PSSCH) is performed at a subchannel granularity in frequency domains. Current channel busy ratio (CBR), channel occupancy ratio (CR), and sidelink received signal strength indicator (RSSI) are calculated at the subchannel granularity. The subchannel is defined as including a subchannel location and a subchannel length, namely the index of a start physical resource block (PRB) of the subchannel and the number of consecutive PRBs.

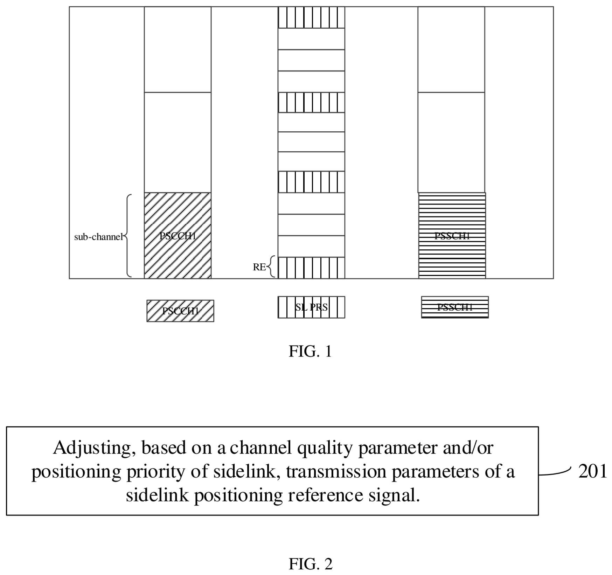

FIG. 1 is a schematic structural diagram of different subchannels for signal transmission according to an embodiment of the present application. As shown in FIG. 1, the transmission of the SL PRS is based on a comb-size pattern, and the definition of the subchannels of PSCCH and PSSCH cannot be reused. Similarly, the calculation formulas of parameters such as CBR, CR and RSSI of the sidelink PSCCH and PSSCH cannot be reused for the SL PRS, and it is necessary to redefine the subchannel for the SL PRS.

In related art, PSSCH transmission parameters are adjusted, including the supported modulation and coding scheme (MCS) range, the selectable range of number of subchannels, the maximum number of transmissions, or the like. However, the transmission of the SL PRS does not involve retransmissions of the coding modulation method. Therefore, in the sidelink positioning, transmission parameters of the PSSCH are not applicable to transmission of the SL PRS, requiring redesign of transmission parameters of the SL PRS to be adjusted.

For the above problems in the related art, the embodiments of the present application provide a method, terminal, apparatus and storage medium for adjusting transmission parameters, which adjusts the transmission parameters of the sidelink positioning reference signal based on the channel quality parameter and/or positioning priority of the sidelink. On one hand, this can ensure that users with relatively high positioning priority can obtain reliable transmission. On the other hand, by adjusting the transmission parameters of the sidelink positioning reference signal, the probability of collision of time and frequency resources for the sidelink positioning reference signal is reduced, interference within the system is reduced, and the sidelink positioning accuracy for UEs is improved.

Terms such as "and/or" in the embodiments of the application describes the association relationship of associated objects, indicating that three relationships may exist. For example, A and/or B may mean three cases, that is, A exists alone, A and B exist at the same time, and B exists alone. The character "/" generally indicates that the previous and next associated objects are in an "or" relationship.

In the embodiments of the application, the term "multiple" refers to two or more than two, and other quantifiers are similar thereto.

The solutions provided by the embodiments of the present application can be applied to a variety of systems, particularly 5G systems. For example, applicable systems may include the global system of mobile communication (GSM) system, the code division multiple access (CDMA) system, the wideband code division multiple access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, the 5G new radio (NR) system, or the like. These various systems include terminal devices and network device. The systems may also include core network components, such as the evolved packet system (EPS) and the 5G system (5GS).

The embodiments of the present application relate to terminal devices, which may refer to devices that provide voice and/or data connectivity to users, handheld devices with wireless connectivity, or other processing devices connected to wireless modems. The names of terminal devices may vary in different systems. For example, in 5G systems, a terminal device may be called a user equipment (UE). A wireless terminal device can communicate with one or more core networks (CNs) via a radio access network (RAN). The wireless terminal device can be a mobile terminal device, such as a mobile phone (also called "cellular" phone), and a computer with the mobile terminal device. For example, the wireless terminal device can be a portable, pocket-sized, handheld, built-in computer, or in-vehicle mobile device that exchanges voice and /or data with the radio access network. Examples include a personal communication service (PCS) phone, a cordless phone, a session initiated protocol (SIP) phone, a wireless local loop (WLL) station, a personal digital assistant (PDA), or the like. The wireless terminal device may also be called a system, a subscriber unit, a subscriber station, a mobile station, a mobile, a remote station, an access point, a remote terminal, an access terminal, a user terminal, a user agent, or a user device, but is not limited in the embodiments of the present application.

The embodiments of the present application relate to network devices, which may refer to base stations, and the base stations may include multiple cells providing services to terminals. Depending on specific application scenarios, a base station may also be called an access point, or may be a device in an access network that communicates with a wireless terminal device via one or more sectors over the air interface, or may be called another name. The network device may be used to interchange received air frames with internet protocol (IP) packets, and may act as a router between the wireless terminal device and the rest of the access network, and the rest of the access network may include an internet protocol (IP) communication network. The network device may also coordinate attribute management of the air interface. For example, the network device in the embodiments of the present application may be a base transceiver station (BTS) in the global system for mobile communication (GSM) or code division multiple access (CDMA), a NodeB in the wide-band code division multiple access (WCDMA), an evolutionary NodeB (eNB or e-NodeB) in the long term evolution (LTE) system, a 5G base station (gNB) in the next generation (5G generation) system, a home evolved NodeB (HeNB), a relay node, a femto, a pico, or the like, and is not limited in the embodiments of the present application. In some network structures, the network device may include a centralized unit (CU) node and a distributed unit (DU) node, and the centralized unit and the distributed unit may also be geographically separated.

The solutions in the embodiments of the present application are clearly and completely described below in conjunction with the accompanying drawings in the embodiments of the present application. Apparently, the embodiments described are only part but not all of the embodiments of the present application. Based on the embodiments of the present application, all other embodiments obtained by those skilled in the art without making any creative efforts shall fall within the scope of protection of the present application.

FIG. 2 is a schematic flow chart of a method for adjusting transmission parameters according to an embodiment of the present application. As shown in FIG. 2, the method is performed by a terminal, and the method includes at least the following steps:

Step 201: adjusting, based on a channel quality parameter and/or positioning priority of sidelink, transmission parameters of a sidelink positioning reference signal.

In some embodiments, the terminal adjusts the transmission parameters of the SL PRS based on the channel quality parameter and/or positioning priority of the sidelink.

The channel quality parameter refers to a parameter value that can reflect the channel quality, such as CBR and CR. The channel quality parameter of the sidelink refers to a parameter value that can reflect the channel quality of the sidelink, and is obtained by the terminal through measurement of the channel quality of the sidelink. The positioning priority refers to priority information related to sidelink positioning, including priority information for positioning services and/or priority information for communication services.

Adjusting the transmission parameters of the SL PRS may include adjusting the time and frequency resources used by the terminal to transmit the SL PRS, a resource occupancy ratio, and the like. In some embodiments, adjusting the transmission parameters of the SL PRS may be performed by the terminal or by a network device (e.g., a base station).

The embodiments of the present application provide a method for adjusting transmission parameters, in which the terminal adjusts the transmission parameters of the sidelink positioning reference signal based on the channel quality parameter and/or positioning priority of the sidelink. On one hand, this can ensure that users with relatively high positioning priority can obtain reliable transmission. On the other hand, by adjusting the transmission parameters of the sidelink positioning reference signal, the probability of collision of time and frequency resources for the sidelink positioning reference signal is reduced, interference within the system is reduced, and the sidelink positioning accuracy for UEs is improved.

In some embodiments, the channel quality parameter of the sidelink includes one or more of a channel busy rate (CBR), a channel occupancy rate (CR), or a sidelink received signal strength indicator (SL RSSI).

In some embodiments, the channel quality parameter of the sidelink may include CBR, CR, SL RSSI, or the like, and the RSSI is a prerequisite for determining the CBR and CR.

In some embodiments, the transmission parameters of the sidelink positioning reference signal include one or more of: a resource pattern of the SL PRS; a resource identifier of the SL PRS; a transmission period for periodically transmitting the SL PRS; a number of orthogonal frequency division multiplexing (OFDM) symbols occupied by the SL PRS; a comb size corresponding to the SL PRS; a transmission power or maximum transmission power for transmitting the SL PRS; a CR limit; or a subchannel for transmitting the SL PRS.

In some embodiments, the transmission parameters of the SL PRS may be one or a combination of the following parameters:

①a transmission period for periodically transmitting the SL PRS: In case that the SL PRS is transmitted periodically, the transmission parameters of the SL PRS include the corresponding period. In case that the congestion is high, the period is shortened. In case that the congestion is low, the period is extended;

②a number of OFDM symbols occupied by the SL PRS: In case that the congestion is high, the number of the OFDM symbols is reduced. In case that the congestion is low, the number of the OFDM symbols is increased;

③a comb size: In case that the congestion is high, the comb size is increased. In case that the congestion is low, the comb size is decreased;

④a transmission power or maximum transmission power for transmitting the SL PRS: In case that the congestion is high, the power is reduced. In case that the congestion is low, the power is increased;

⑤a CR limit: The CR limit ensures that the sum of CRs corresponding to sidelink transmissions with positioning priorities having values of $k$ or more is less than or equal to a CR corresponding to a sidelink transmission with a positioning priority having a value of $k$. In other words, the accumulated sum of CRs corresponding to sidelink transmissions with positioning priorities having values from 1 to $i$ is less than or equal to a CR corresponding to a sidelink transmission with a positioning priority having a value of $k$, where $i$ is less than or equal to $k$;

⑥a subchannel for transmitting the SL PRS: The subchannel for transmitting the SL PRS included in the transmission parameters may include the subchannel location and the subchannel length, namely the index of a start PRB of the subchannel and the number of consecutive PRBs, and may also include the number of subchannels;

⑦a resource pattern or resource identifier of the SL PRS: In an in-coverage scenario, the transmission parameters of the SL PRS may also include the resource pattern of the SL PRS. In case that the congestion is high, the resource pattern of the SL PRS that occupies less time and frequency resources is selected. In case that the congestion is low, the resource pattern of the SL PRS that occupies more time and frequency resources is selected. In some embodiments, this is achieved by configuring different resource identifiers or indexes of the SL PRS.

In some embodiments, in an in-coverage scenario, the transmission parameters of the SL PRS may further include a CBR limit, which may include a first threshold value x and/or a second threshold value y. The first threshold value x is less than the second threshold value y. The first threshold value x and the second threshold value y represent the degree of congestion. In case that the SL CBR is less than the first threshold value x, it indicates low congestion. In case that the SL CBR is greater than the second threshold value y, it indicates high congestion.

In some embodiments, in an out-of-coverage scenario, in case that the sum of CRs corresponding to positioning priorities with values from 1 to i is less than or equal to a CR corresponding to a positioning priority with a value of $k$, the CR limit is the CR corresponding to the positioning priority with the value of $k$, where the value of $i$ is less than or equal to the value of $k$.

In some embodiments, the CR limit satisfies the following calculation formula:

$$\sum_{i \leq k} CR(i) \leq CR_{limit}(k)$$

where $CR_{limit}(k)$ is the CR limit measured for a sidelink transmission with a positioning priority $k$ and a slot (n-N), $CR(i)$ is a CR corresponding to a sidelink transmission with a positioning priority i measured for a slot (n-N), n represents a slot or subframe, N is associated with a subcarrier spacing, and both n and N are integers.

In some embodiments, the CR limit are primarily targeted at an out-of-network coverage scenario, where the terminal autonomously selects the time and frequency resources for transmitting the SL PRS. $CR_{limit}(k)$ is the CR limit measured for a sidelink transmission with a positioning priority $k$ and a slot (n-N), which is configured by higher layer. $CR(i)$ is a CR corresponding to a sidelink transmission with a positioning priority i measured for a slot (n-N). The CRs corresponding to positioning priorities with values from 1 to $i$ are accumulated, and the accumulated sum is less than or equal to a CR corresponding to a sidelink transmission with a positioning priority having a value of $k$, where $i$ is less than or equal to $k$. From this, the value of $CR_{limit}(k)$ is determined. n represents a slot or subframe.

N is associated with a subcarrier spacing and represents the ability of the terminal to handle congestion. Both n and N are integers. The ability of the terminal to handle congestion can be measured by the time that the terminal takes to handle congestion. For example, the ability of the terminal to handle congestion is divided into capability 1 or capability 2. The capability 1 corresponds to N with a value of 2, 2, 4, or 8, corresponding to subcarrier spacings of 15kHz, 30kHz, 60kHz, or 120kHz, respectively. The capability 2 corresponds to N with a value of 2, 4, 8, or 16, corresponding to subcarrier spacings of 15kHz, 30kHz, 60kHz, or 120kHz, respectively.

In some embodiments, the method for adjusting transmission parameters further includes:
determining the channel quality parameter of the sidelink.

In some embodiments, before adjusting the transmission parameters of the SL PRS based on the channel quality parameter of the sidelink, the terminal needs to determine the channel quality parameter of the sidelink.

In some embodiments, determining the channel quality parameter of the sidelink includes:

determining, based on a channel quality parameter corresponding to the sidelink positioning reference signal, the channel quality parameter of the sidelink; or

determining, based on a channel quality parameter corresponding to the sidelink positioning reference signal and a channel quality parameter corresponding to other signals transmitted in a same slot as the sidelink positioning reference signal, the channel quality parameter of the sidelink.

In some embodiments, there are multiple solutions for the terminal to determine the channel quality parameter of the sidelink.

Solution 1: determining the channel quality parameter of the sidelink based on a channel quality parameter corresponding to the SL PRS. In this case, the sidelink may only have the SL PRS, or may have both the SL PRS and other signals transmitted in the same slot as the SL PRS.

An example is described, in which the channel quality parameter is CBR. In this case, one terminal obtains one SL PRS CBR, and multiple terminals can obtain multiple SL PRS CBRs, and the SL PRS CBRs obtained by multiple terminals can be weighted to obtain the final SL CBR, or the maximum or minimum value of the SL PRS CBRs obtained by multiple terminals can be taken to obtain the final SL CBR.

Solution 2: a channel quality parameter corresponding to the SL PRS and a channel quality parameter corresponding to other signals transmitted in the same slot as the SL PRS are used as basis.

An example is described, in which the channel quality parameter is CBR. In this case, in a sidelink, multiple reference signals may be transmitted in the same slot as the SL PRS. A CBR is measured for each reference signal. The CBRs corresponding to different reference signals are weighted to obtain the final SL CBR, or the extreme value of the CBRs corresponding to different reference signals are taken to obtain the final SL CBR.

In some embodiments, the other signals transmitted in the same slot as the sidelink positioning reference signal include one or more of:

a signal carried by physical sidelink control channel (PSCCH);
a signal carried by physical sidelink shared channel (PSSCH); or
a signal carried by physical sidelink feedback channel (PSFCH).

In some embodiments, other signals transmitted in the same slot as the SL PRS may be one or more signals carried by the PSCCH, PSSCH, or PSFCH.

An example is described, in which the signals carried by PSCCH and PSSCH are transmitted in the same slot as the SL PRS and the channel quality parameter is CBR. The channel quality parameter of the sidelink can be determined as follows:

The SL CBR is determined based on one or more of SL PSCCH CBR, SL PSSCH CBR, or SL PRS CBR. In one implementation, the final SL CBR = $X$ SL PRS CBR + $Y$ SL PSCCH CBR + $Z$ SL PSSCH CBR, where $0 \leq X \leq 1$, $0 \leq Y \leq 1$, $0 \leq Z \leq 1$, and $X+Y+Z=1$. In one implementation, SL PRS CBR > SL PSCCH CBR, SL PRS CBR > SL PSSCH CBR, and the final SL CBR = SL PRS CBR. The SL CBR is determined based on the SL RSSI. After the SL CBR is determined, the SL CR is determined in the same manner.

In some embodiments, determining the channel quality parameter of the sidelink includes:

determining, based on a channel quality parameter measured by the terminal itself and a channel quality parameter measured and shared by other terminals except the terminal itself, the channel quality parameter of the sidelink;
determining, based on a channel quality parameter measured and shared by other terminals except the terminal itself, the channel quality parameter of the sidelink; or
receiving the channel quality parameter of the sidelink transmitted by a third-party device, where the channel quality parameter of the sidelink is determined based on a channel quality parameter measured and shared by each terminal.

In some embodiments, the channel quality parameter measured by each terminal may be shared as coordination information between terminals.

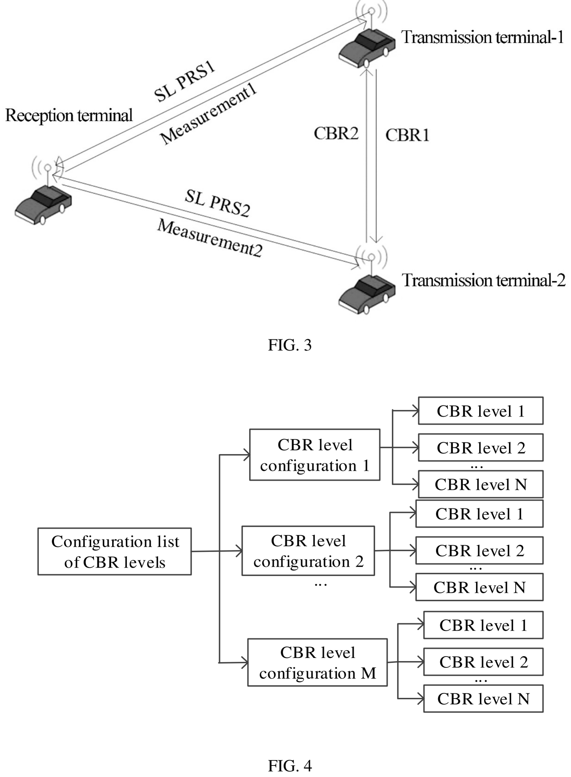

An example is described, in which the channel quality parameter is CBR. FIG. 3 is a schematic flow chart of interaction between a transmission terminal and a reception terminal according to an embodiment of the present application. As shown in FIG. 3, based on transmission directions of the sidelink positioning reference signal, the terminal can be divided into a reception terminal and a transmission terminal. Different transmission terminals need to share coordination information so as to predict the busyness of channels of the receiving end from the resource occupancy of the signals transmitted by each transmitting end, thereby adjusting the transmission parameters of the SL PRS, improving the measurement accuracy of the SL PRS received by the receiving end, and ensuring the quality of positioning services.

In an out-of-network coverage scenario, based on the CBR measurement method, it can be divided into the following:

Case 1: the channel quality parameter is measured by the transmission terminal, and the CBR measurement results are shared among each transmission terminal. Each transmission terminal determines the CBR of the sidelink based on the CBR measured itself and the CBRs measured and shared by other transmission terminals except the transmission terminal itself. In some embodiments, this determination can be made using a weighted or extreme value.

Case 2: the CBR is measured by the reception terminal, which then shares the CBR measurement results with each transmission terminal. Each transmission terminal determines the CBR of the sidelink based on the CBRs measured and shared by other reception terminals except the transmission terminal itself. In some embodiments, this determination can be made using a weighted or extreme value.

Case 3: both the transmission terminal and the reception terminal measure the CBR and share the CBR with a third-party device. The third-party device determines the CBR of the sidelink based on the CBRs measured and shared by each transmission terminal and each reception terminal, and then transmits the CBR of the sidelink to each transmission terminal and each reception terminal. In some embodiments, this determination can be made using a weighted or extreme value. In an out-of-coverage scenario, the third-party device can be a server terminal (Server UE). Each transmission terminal receives the channel quality parameter of the sidelink transmitted by the server terminal. The server terminal determines the channel quality parameter of the sidelink based on a channel quality parameter measured and shared by each transmission terminal and each reception terminal.

In an in-network coverage scenario, both the transmission terminal and the reception terminal measure the CBR and share the CBR with a third-party device. The third-party device determines the CBR of the sidelink based on the CBRs measured and shared by each transmission terminal and each reception terminal, and then transmits the CBR of the sidelink to each transmission terminal and each reception terminal. In some embodiments, this determination can be made using a weighted or extreme value. In an in-coverage scenario, the third-party device can be a location management function (LMF) or base station (gNB). Each transmission terminal receives the channel quality parameter of the sidelink transmitted from the LMF or gNB. The LMF or gNB determines the channel quality parameter of the sidelink based on a channel quality parameter measured and shared by each transmission terminal and each reception terminal.

The embodiments of the present application provides a method for adjusting transmission parameters, in which the measurement result of the channel quality parameter is shared among each transmission terminal, which is beneficial for predicting the busyness of channels of the receiving end from the resource occupancy of the signals transmitted by multiple transmitting ends, thereby adjusting the transmission parameters of the SL PRS, improving the measurement accuracy of the SL PRS received by the receiving end, and ensuring the quality of positioning services.

In some embodiments, the method for adjusting transmission parameters further includes: determining the positioning priority.

In some embodiments, before adjusting the transmission parameters of the SL PRS based on the positioning priority, the terminal needs to determine the positioning priority.

In some embodiments, determining the positioning priority includes:

in case that a type of a resource pool used for sidelink positioning services is a dedicated resource pool, determining that the positioning priority is first priority information; or

in case that a type of a resource pool used for sidelink positioning services is a shared resource pool, determining that the positioning priority is second priority information for communication services, determining that the positioning priority is third priority information for positioning services, or determining that the positioning priority is fourth priority information for both communication services and positioning services.

FIG. 4 is a schematic diagram of correspondence between CBR level configurations and CBR levels according to an embodiment of the present application. As shown in FIG. 4, multiple CBR level configurations are set by higher layer, and each CBR level configuration corresponds to multiple CBR levels.

Different positioning priorities correspond to different CBR level configurations, and the higher layer need to define a new positioning priority. Types of resource pools for sidelink positioning services include a dedicated resource pool and a shared resource pool. Resources in the dedicated resource pool are used only for positioning services, while resources in the shared resource pool are used for both positioning services and data communications.

For the dedicated resource pool, the higher layer additionally defines a positioning priority, which is first priority information and can be indicated by priority indication information 0.

For the shared resource pool, the sidelink positioning already has priority information for communication services, which is second priority information and can be indicated by priority indication information 1. The higher layer additionally defines third priority information for positioning services, which can be indicated by priority indication information 2. In some embodiments, fourth priority information is additionally defined for communication services and positioning services, which can be indicated by priority indication information 3.

In case that the type of the resource pool is the dedicated resource pool, the terminal determines that the positioning priority is the first priority information. In case that the type of the resource pool is the shared resource pool, the terminal determines that the positioning priority is the second priority information for communication services, determines that the positioning priority is the third priority information for positioning services, or determines that the positioning priority is the fourth priority information for communication services and positioning services.

In some embodiments, in case that the type of the resource pool is the shared resource pool, adjusting the transmission parameters of the sidelink positioning reference signal based on the positioning priority includes:

determining that the positioning priority is the fourth priority information, and adjusting the transmission parameters of the sidelink positioning reference signal based on the fourth priority information; or

determining that the positioning priority is the second priority information or the third priority information based on higher layer indication information, and adjusting the transmission parameters of the sidelink positioning reference signal based on the determined positioning priority.

In some embodiments, in case that the type of the resource pool is the shared resource pool, adjusting the transmission parameters of the SL PRS by the terminal or network device based on the positioning priority includes:

① determining that the positioning priority is the fourth priority information for communication services and positioning services, and adjusting the transmission parameters of the SL PRS based on the fourth priority information. In some embodiments, the positioning priority is determined as the fourth priority information for communication services and positioning services based on priority indication information 3.

②In case that it is necessary to distinguish between communication services and positioning services, higher layer indication information (Indicator) is introduced. In this case, the terminal determines that the positioning priority is the second priority information or the third priority information based on the higher layer indication information, and adjusts the transmission parameters of the SL PRS based on the determined positioning priority. The higher layer indication information can be the aforementioned priority indication information 1 or priority indication information 2. The higher layer indication information can also be an independent Indiactor. For example, in case that Indiactor=1, the terminal or base station adjusts the transmission parameters of the SL PRS based on the second priority information. In case that Indiactor=0, the terminal or base station adjusts the transmission parameters of the SL PRS based on the third priority information.

In some embodiments, in case that the type of the resource pool is the dedicated resource pool, adjusting the transmission parameters of the sidelink positioning reference signal based on the positioning priority includes: determining that the positioning priority is the first priority information, and adjusting the transmission parameters of the sidelink positioning reference signal based on the first priority information.

In some embodiments, in case that the type of the resource pool is the dedicated resource pool, adjusting the transmission parameters of the SL PRS by the terminal or network device based on the positioning priority includes: determining that the positioning priority is the first priority information, and adjusting the transmission parameters of the SL PRS based on the first priority information. In some embodiments, it is indicated by priority indication information 0 that the positioning priority is the first priority information.

In some embodiments, in an out-of-coverage scenario, adjusting the transmission parameters of the sidelink positioning reference signal includes:

determining a two-dimensional table configured for the transmission parameters, where the two-dimensional table is associated with a CBR level and the positioning priority; and

adjusting the transmission parameters of the sidelink positioning reference signal based on the two-dimensional table.

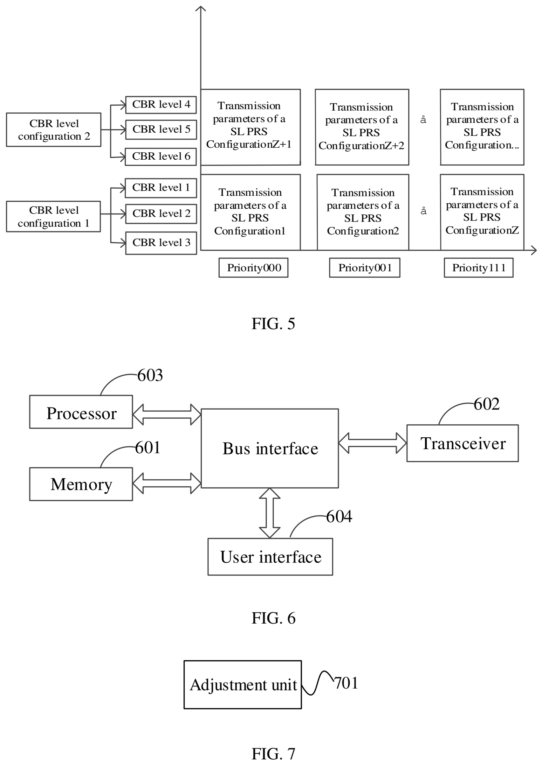

In some embodiments, in an out-of-network coverage scenario, the higher layer configures an association table associated with the transmission parameters of the SL PRS. The association table can be, for example, a two-dimensional table, with the two dimensions being CBR level and positioning priority, respectively. FIG. 5 is a schematic diagram of mapping relationship between CBR levels and positioning priorities in a two-dimensional table according to an embodiment of the present application. As shown in FIG. 5, multiple CBR level configurations are set by higher layer, and each CBR level configuration corresponds to multiple CBR levels. Priority 000, priority 001, and priority 111 represent different positioning priorities, and mapping relationship is configured among CBR levels, positioning priorities, and SL PRS transmission parameters, forming a two-dimensional table representing the mapping relationship.

Adjusting the transmission parameters of the SL PRS by the terminal or network device can be adjusting the transmission parameters of the SL PRS by the terminal or network device based on the two-dimensional table. The terminal searches the two-dimensional table to adjust the transmission parameters of the SL PRS. In one implementation, the terminal determines the corresponding CBR level based on the currently measured CBR, and searches the two-dimensional table for the corresponding configurations of the transmission parameters of the SL PRS in combination with the positioning priority. In case that the current transmission parameters of the SL PRS are different from the configurations of the transmission parameters of the SL PRS searched in the two-dimensional table, the transmission parameters of the SL PRS need to be adjusted according to the searched contents of the two-dimensional table.

In some embodiments, in an in-coverage scenario, adjusting the transmission parameters of the sidelink positioning reference signal includes:

in case that a CBR is less than a first threshold value, or in case that a CBR is greater than a second threshold value, adjusting the transmission parameters of the sidelink positioning reference signal,
where the first threshold value is less than the second threshold value.

In some embodiments, in an in-network coverage scenario, the higher layer defines threshold values indicating the degree of congestion, including a first threshold value x and/or a second threshold value y. The first threshold value x is less than the second threshold value y. In case that the SL CBR is less than the first threshold value x, it indicates low congestion. In case that the SL CBR is greater than the second threshold value y, it indicates high congestion. In case that the CBR is less than the first threshold value, or in case that the CBR is greater than the second threshold value, the transmission parameters of the SL PRS are adjusted. In an in-coverage scenario, the network device adjusts the transmission parameters of the SL PRS and notifies the transmission terminal, in case that there is high congestion or low congestion.

In some embodiments, the method for adjusting transmission parameters further includes:
determining a subchannel for transmitting the sidelink positioning reference signal based on one or more of following parameters:

an index of a start physical resource block in physical resource blocks corresponding to resource units to which the sidelink positioning reference signal is mapped;
a number of consecutive physical resource blocks;
a comb size of the subchannel;
an offset of a resource unit; or
a bandwidth of the sidelink positioning reference signal.

In some embodiments, the transmission of the SL PRS is based on a comb-size pattern and the definition of the subchannels of PSCCH and PSSCH cannot be reused. Therefore, the subchannel of the SL PRS is redefined in the present application. The terminal or network device determines the subchannel for transmitting the SL PRS based on one or more of the following parameters:

①an index of a start PRB (start PRB Index) in PRBs corresponding to resource units to which the sidelink positioning reference signal is mapped;
②a number of consecutive PRBs (RBnum), indicating the number of resource blocks that can be scheduled currently;
③a comb size (combsize) of the subchannel;
④an offset of a resource unit; or
⑤a bandwidth of the SL PRS,
where ① and ② are used for reflecting the location and length of the subchannel. In some embodiments, the number of subchannels is also included.

In some embodiments, the subchannel includes resource units for transmitting the sidelink positioning reference signal, or the subchannel includes resource units for transmitting the sidelink positioning reference signal and blank resource units.

In some embodiments, the subchannel of the SL PRS may be a collection of resource units used only for transmitting the SL PRS. In this case, the number of subchannels of the SL PRS may be determined by the total number of resource units REnum and RBnum occupied by the SL PRS. For example, the number of subchannels of the SL PRS may be calculated by the following formula:

## The number of subchannels of the SL PRS = REnum/12/RBnum

where REnum represents the number of resource particles that are valid for scheduling, and RBnum represents the number of resource blocks that can be scheduled currently.

The subchannel of the SL PRS may also be a collection of resource units for transmitting the SL PRS and blank resource units.

Solutions of embodiments of the present application are further described below by means of several specific examples.

Example 1: the type of the resource pool is the dedicated resource pool.

(1) The terminal or network device determines the subchannel for transmitting the SL PRS based on one or more of the following:

①an index of a start PRB (start PRB Index) in PRBs corresponding to resource units to which the sidelink positioning reference signal is mapped;
②a number of consecutive PRBs (RBnum), indicating the number of resource blocks that can be scheduled currently;
③a comb size (combsize) of the subchannel;
④an offset of a resource unit;
⑤a bandwidth of the SL PRS; or
⑥a length and/or number of subchannel of the SL PRS.

The subchannel of the SL PRS may be a collection of resource units used only for transmitting the SL PRS. In this case, the number of subchannels of the SL PRS can be determined by the total number of resource units REnum and RBnum occupied by the SL PRS. For example, the number of subchannels of the SL PRS can be calculated by the formula REnum/12/RBnum. The subchannel of the SL PRS may also be a collection of resource units for transmitting the SL PRS and blank resource units.

(2) The terminal calculates and measures the SL RSSI, SL CBR, and SL CR based on one or more combinations of the signal carried by the PSCCH, the SL PRS, and the signal carried by the PSSCH.

①The terminal measures SL RSSI:

SL PRS RSSI: the linear average of the total received power (in [W]) observed in the configured subchannels over the OFDM symbols of the slot configured for the SL PRS, starting from the second OFDM symbol;
SL PSCCH RSSI: the linear average of the total received power (in [W]) observed in the configured subchannels over the OFDM symbols of the slot configured for the PSCCH, starting from the second OFDM symbol;
SL PSSCH RSSI: the linear average of the total received power (in [W]) observed in the configured subchannels over the OFDM symbols of the slot configured for the PSSCH, starting from the second OFDM symbol;

②The terminal measures SL CBR:

SL PRS CBR: the ratio of subchannels with SL PRS RSSI measurement results above a threshold to the total number of subchannels within the measurement window [n-a,n-1], when SL PRS RSSI measurement is performed on transmission resources of each subchannel of the SL PRS in each slot within the measurement window;
SL PSCCH CBR: the ratio of subchannels with SL PSCCH RSSI measurement results above a threshold to the total number of subchannels within the measurement window [n-a,n-1], when SL PSCCH RSSI measurement is performed on transmission resources of each subchannel of the PSCCH in each slot within the measurement window;
SL PSSCH CBR: the ratio of subchannels with SL PSSCH RSSI measurement results above a threshold to the total number of subchannels within the measurement window [n-a,n-1], when SL PSSCH RSSI measurement is performed on transmission resources of each subchannel of the PSSCH in each slot within the measurement window,
where n and a represent slots, the value of a can be a=100, or a= $100 \cdot 2^{\mu}$, and the value of $\mu$ can be 0, 1, 2, or 3, with $\mu$=0, 1, 2, and 3 representing subcarrier spacings of 15kHz, 30kHz, 60kHz, and 120kHz, respectively.

It should be noted that, the final channel busy rate SL CBR = X SL PRS CBR + Y SL PSCCH CBR + Z SL PSSCH CBR, where 0≤X≤1, 0≤Y≤1, 0≤Z≤1, and X+Y+Z=1.

③The terminal measures SL CR:

SL PRS CR: the ratio of the sum of the number of subchannels used by the UE to transmit the SL PRS within the measurement window [n-a,n-1] and the number of subchannels included in the sidelink grant obtained within the measurement window [n,n+b] to the total number of subchannels belonging to the dedicated resource pool within the measurement window [n-a,n+b];

SL PSCCH CR: the ratio of the sum of the number of subchannels used by the UE to transmit the PSCCH within the measurement window [n-a,n-1] and the number of subchannels included in the sidelink grant obtained within the measurement window [n,n+b] to the total number of subchannels belonging to the resource pool within the measurement window [n-a,n+b];

SL PSSCH CR: the ratio of the sum of the number of subchannels used by the UE to transmit the PSSCH within the measurement window [n-a,n-1] and the number of subchannels included in the sidelink grant obtained within the measurement window [n,n+b] to the total number of subchannels belonging to the resource pool within the measurement window [n-a,n+b],

where n, a and b represent slots, the values of a and b satisfy: a+b+1=1000 or a+b+1=1000·$2^\mu$, and the value of $\mu$ can be 0, 1, 2, or 3, with $\mu$=0, 1, 2, and 3 representing subcarrier spacings of 15kHz, 30kHz, 60kHz, and 120kHz, respectively.

It should be noted that the final channel occupancy rate SL CR = X·SL PRS CR + Y·SL PSCCH CR + Z·SL PSSCH CR, where the values of X, Y, and Z are the same as those used in calculating SL CBR.

(3) The CBR measurement results are shared as coordination information among terminals.

In an out-of-coverage scenario:

Case 1: the SL CBR is measured by the transmission terminal, and the SL CBR measurement results are shared among each transmission terminal. Each transmission terminal determines the final channel quality parameter based on the SL CBR measured itself and the SL CBRs measured and shared by other transmission terminals except the transmission terminal itself. In some embodiments, this determination can be made using a weighted or extreme value.

Case 2: the SL CBR is measured by the reception terminal, which then shares the SL CBR measurement results with each transmission terminal. Each transmission terminal determines the final SL CBR based on the SL CBRs measured and shared by other reception terminals except the transmission terminal itself. In some embodiments, this determination can be made using a weighted or extreme value.

Case 3: both the transmission terminal and the reception terminal measure the SL CBR and share the SL CBR with a Server UE. The Server UE determines the final SL CBR based on the SL CBRs measured and shared by each transmission terminal and each reception terminal, and then transmits the final SL CBR to each transmission terminal and each reception terminal.

In an in-network coverage scenario, both the transmission terminal and the reception terminal measure the SL CBR and share the SL CBR with an LMF or gNB. The LMF or gNB determines the final SL CBR based on the SL CBRs measured and shared by each transmission terminal and each reception terminal, and then transmits the final SL CBR to each transmission terminal and each reception terminal. In some embodiments, this determination can be made using a weighted or extreme value.

Sharing coordination information (namely CBR measurement results) by multiple transmitting ends is beneficial for predicting the busyness of channels of the receiving end from the resource occupancy of the signals transmitted by multiple transmitting ends, adjusting the transmission parameters of the SL PRS based on the coordination information, improving the measurement accuracy of the SL PRS received by the receiving end, and ensuring the quality of positioning services.

(4) Multiple CBR level configurations are set by higher layer, and each CBR level configuration corresponds to multiple CBR levels. Different positioning priorities correspond to different CBR level configurations. The higher layer needs to additionally define the priority for positioning services, which is first priority information and indicated by priority indication information 0.

(5) the transmission parameters of the SL PRS may be one or a combination of the following parameters:

①a transmission period for periodically transmitting the SL PRS;

②a number of OFDM symbols occupied by the SL PRS;

③a transmission power or maximum transmission power for transmitting the SL PRS;
④a CR limit;
⑤a subchannel for transmitting the SL PRS; or
⑥a resource pattern or resource identifier of the SL PRS.

In an out-of-network coverage scenario, the higher layer configures a two-dimensional table, which is configured for the transmission parameters of the SL PRS based on a SL CBR level and a positioning priority (corresponding to the first priority information and priority indication information 0). The terminal searches the two-dimensional table to adjust the transmission parameters of the SL-PRS. The function of the parameter CR limit is: the sum of CRs corresponding to sidelink transmissions with positioning priorities having values of $k$ or more is less than or equal to a CR corresponding to a sidelink transmission with a positioning priority $k$, that is,

$$\sum_{i \geq k} CR(i) \leq CR_{limit}(k)$$

where $CR_{limit}(k)$ is the CR limit measured for a sidelink transmission with a positioning priority $k$ and a slot (n-N), $CR(i)$ is a CR corresponding to a sidelink transmission with a positioning priority i measured for a slot (n-N), and n represents a slot or subframe.

N is associated with a subcarrier spacing, and indicates the ability of the terminal to handle congestion. The ability of the terminal to handle congestion can be measured by the time that the terminal takes to handle congestion. For example, the ability of the terminal to handle congestion is divided into capability 1 or capability 2. The capability 1 corresponds to N with a value of 2, 2, 4, or 8, corresponding to subcarrier spacings of 15kHz, 30kHz, 60kHz, or 120kHz, respectively. The capability 2 corresponds to N with a value of 2, 4, 8, or 16, corresponding to subcarrier spacings of 15kHz, 30kHz, 60kHz, or 120kHz, respectively.

In an in-network coverage scenario, the higher layer defines congestion thresholds x and y. A SL CBR being greater than x indicates high congestion, and a CBR being less than y indicates low congestion.

The network device adjusts one or more of the following transmission parameters of the SL PRS and notifies the transmission terminal, in case that there is high congestion or low congestion:

①a transmission period (if periodic positioning is used): In case that the congestion is high, the period is shortened. In case that the congestion is low, the period is extended;
②a number of OFDM symbols occupied by the SL-PRS: In case that the congestion is high, the number of OFDM symbols is reduced. In case that the congestion is low, the number of OFDM symbols is increased;
③a comb size: In case that the congestion is high, the comb size is increased. In case that the congestion is low, the comb size is decreased;
④a maximum transmission power/transmission power: In case that the congestion is high, the power is reduced. In case that the congestion is low, the power is increased;
⑤a resource pattern of the SL PRS: In case that the congestion is high, the resource pattern of the SL PRS that occupies less time and frequency resources is selected. In case that the congestion is low, the resource pattern of the SL PRS that occupies more time and frequency resources is selected. This can be achieved by configuring different resource identifiers or indexes of the SL PRS.

Example 2: the type of the resource pool is the shared resource pool.

(1) The terminal or network device determines the subchannel for transmitting the SL PRS based on one or more of the following:

①an index of a start PRB (start PRB Index) in PRBs corresponding to resource units to which the sidelink positioning reference signal is mapped;
②a number of consecutive PRBs (RBnum), indicating the number of resource blocks that can be scheduled currently;
③a comb size (combsize) of the subchannel;
④an offset of a resource unit;
⑤a bandwidth of the SL PRS; or
⑥a length and/or number of subchannel of the SL PRS.

The subchannel of the SL PRS may be a collection of resource units used only for transmitting the SL PRS. In this case, the number of subchannels of the SL PRS can be determined by the total number of resource units REnum and RBnum occupied by the SL PRS. For example, the number of subchannels of the SL PRS can be calculated by the formula REnum/12/RBnum. The subchannel of the SL PRS may also be a collection of resource units for transmitting the SL PRS and blank resource units.

(2) The terminal calculates the SL RSSI, SL CBR, and SL CR based on the signal carried by the PSCCH, the SL PRS, and the signal carried by the PSSCH.

①The terminal measures SL RSSI: the linear average of the total received power (in [W]) observed in the configured subchannels over the OFDM symbols of the slot configured for the SL PRS, the signal carried by the PSCCH, and the signal carried by the PSSCH, starting from the second OFDM symbol.

②The terminal measures SL CBR: the ratio of subchannels with SL PRS RSSI measurement results above a threshold to the total number of subchannels within the measurement window [n-a,n-1], when SL PRS RSSI measurement is performed on transmission resources of each subchannel (including the subchannel of the SL PRS) in each slot within the measurement window, where n and a represent slots, the value of a can be a=100 or a= $100 \cdot 2^{\mu}$, and the value of $\mu$ can be 0, 1, 2, or 3, with $\mu$=0, 1, 2, and 3 representing subcarrier spacings of 15kHz, 30kHz, 60kHz, and 120kHz, respectively.

③the terminal measures SL CR: the ratio of the sum of the number of subchannels used by the UE to transmit the data and SL PRS within the measurement window [n-a,n-1] and the number of subchannels included in the sidelink grant obtained within the measurement window [n,n+b] to the total number of subchannels belonging to the dedicated resource pool within the measurement window [n-a,n+b], where n, a and b represent slots, the values of a and b satisfy: a+b+1=1000 or a+b+1=1000·$2^{\mu}$, and the value of $\mu$ can be 0, 1, 2, or 3, with $\mu$=0, 1, 2, and 3 representing subcarrier spacings of 15kHz, 30kHz, 60kHz, and 120kHz, respectively.

(3) The CBR measurement results are shared as coordination information among terminals.

In an out-of-coverage scenario:

Case 1: the SL CBR is measured by the transmission terminal, and the SL CBR measurement results are shared among each transmission terminal. Each transmission terminal determines the final channel quality parameter based on the SL CBR measured itself and the SL CBRs measured and shared by other transmission terminals except the transmission terminal itself. In some embodiments, this determination can be made using a weighted or extreme value.

Case 2: the SL CBR is measured by the reception terminal, which then shares the SL CBR measurement results with each transmission terminal. Each transmission terminal determines the final SL CBR based on the SL CBRs measured and shared by other reception terminals except the transmission terminal itself. In some embodiments, this determination can be made using a weighted or extreme value.

Case 3: both the transmission terminal and the reception terminal measure the SL CBR and share the SL CBR with a Server UE. The Server UE determines the final SL CBR based on the SL CBRs measured and shared by each transmission terminal and each reception terminal, and then transmits the final SL CBR to each transmission terminal and each reception terminal.

In an in-network coverage scenario, both the transmission terminal and the reception terminal measure the SL CBR and share the SL CBR with an LMF or gNB. The LMF or gNB determines the final SL CBR based on the SL CBRs measured and shared by each transmission terminal and each reception terminal, and then transmits the final SL CBR to each transmission terminal and each reception terminal. In some embodiments, this determination can be made using a weighted or extreme value.

Sharing coordination information (namely CBR measurement results) by multiple transmitting ends is beneficial for predicting the busyness of channels of the receiving end from the resource occupancy of the signals transmitted by multiple transmitting ends, adjusting the transmission parameters of the SL PRS based on the coordination information, improving the measurement accuracy of the SL PRS received by the receiving end, and ensuring the quality of positioning services.

(4) Multiple CBR level configurations are set by higher layer, and each CBR level configuration corresponds to multiple CBR levels. Different positioning priorities correspond to different CBR level configurations. The higher layer needs to additionally define the priority for positioning services.

The sidelink positioning already has priority information for communication services, which is second priority information and can be indicated by priority indication information 1. The higher layer additionally defines third priority information for positioning services, which can be indicated by priority indication information 2. In some embodiments, fourth priority information is additionally defined for communication services and positioning services, which can be indicated by priority indication information 3.

① it is determined that the positioning priority is the fourth priority information for communication services and positioning services based on priority indication information 3, and the transmission parameters of the SL PRS is adjusted based on the fourth priority information.

② The higher layer indication information can also be an independent Indiactor. For example, in case that Indiactor=1, the terminal or base station adjusts the transmission parameters of the SL PRS based on the second priority information or priority indication information 1. In case that Indiactor=0, the terminal or base station adjusts the transmission parameters of the SL PRS based on the third priority information or priority indication information 2.

(5) the transmission parameters of the SL PRS may be one or a combination of the following parameters:

①a transmission period for periodically transmitting the SL PRS;
②a number of OFDM symbols occupied by the SL PRS;
③a transmission power or maximum transmission power for transmitting the SL PRS;
④a CR limit;
⑤a subchannel for transmitting the SL PRS; or
⑥a resource pattern or resource identifier of the SL PRS.

In an out-of-network coverage scenario, the higher layer configures a two-dimensional table, which is configured for the transmission parameters of the SL PRS based on a SL CBR level and a positioning priority (corresponding to the first priority information and priority indication information 0). The terminal searches the two-dimensional table to adjust the transmission parameters of the SL-PRS.

In an in-network coverage scenario, the higher layer defines congestion thresholds x and y. A SL CBR being greater than x indicates high congestion, and a CBR being less than y indicates low congestion.

The network device adjusts one or more of the following transmission parameters of the SL PRS and notifies the transmission terminal, in case that there is high congestion or low congestion:

①a transmission period (if periodic positioning is used): In case that the congestion is high, the period is shortened. In case that the congestion is low, the period is extended;
②a number of OFDM symbols occupied by the SL-PRS: In case that the congestion is high, the number of OFDM symbols is reduced. In case that the congestion is low, the number of OFDM symbols is increased;
③a comb size: In case that the congestion is high, the comb size is increased. In case that the congestion is low, the comb size is decreased;
④a maximum transmission power/transmission power: In case that the congestion is high, the power is reduced. In case that the congestion is low, the power is increased;
⑤a resource pattern of the SL PRS: In case that the congestion is high, the resource pattern of the SL PRS that occupies less time and frequency resources is selected. In case that the congestion is low, the resource pattern of the SL PRS that occupies more time and frequency resources is selected. This can be achieved by configuring different resource identifiers or indexes of the SL PRS.

Example 3: the type of the resource pool is the shared resource pool.

(1) The terminal or network device determines the subchannel for transmitting the SL PRS based on one or more of the following:

①an index of a start PRB (start PRB Index) in PRBs corresponding to resource units to which the sidelink positioning reference signal is mapped;
②a number of consecutive PRBs (RBnum), indicating the number of resource blocks that can be scheduled currently;
③a comb size (combsize) of the subchannel;
④an offset of a resource unit;
⑤a bandwidth of the SL PRS; or
⑥a length and/or number of subchannel of the SL PRS.

The subchannel of the SL PRS may be a collection of resource units used only for transmitting the SL PRS. In this case, the number of subchannels of the SL PRS can be determined by the total number of resource units REnum and RBnum occupied by the SL PRS. For example, the number of subchannels of the SL PRS can be calculated by the formula REnum/12/RBnum. The subchannel of the SL PRS may also be a collection of resource units for transmitting the SL PRS and blank resource units.

(2) The terminal calculates and measures the SL RSSI, SL CBR, and SL CR based on one or more combinations of the signal carried by the PSCCH, the SL PRS, and the signal carried by the PSSCH.

① The terminal measures SL RSSI:

SL PRS RSSI: the linear average of the total received power (in [W]) observed in the configured subchannels over the OFDM symbols of the slot configured for SL PRS, starting from the second OFDM symbol;

SL PSCCH RSSI: the linear average of the total received power (in [W]) observed in the configured subchannels over the OFDM symbols of the slot configured for the PSCCH, starting from the second OFDM symbol;

SL PSSCH RSSI: the linear average of the total received power (in [W]) observed in the configured subchannels over the OFDM symbols of the slot configured for the PSSCH, starting from the second OFDM symbol;

② The terminal measures SL CBR:

SL PRS CBR: the ratio of subchannels with SL PRS RSSI measurement results above a threshold to the total number of subchannels within the measurement window [n-a,n-1], when SL PRS RSSI measurement is performed on transmission resources of each subchannel of the SL PRS in each slot within the measurement window;

SL PSCCH CBR: the ratio of subchannels with SL PSCCH RSSI measurement results above a threshold to the total number of subchannels within the measurement window [n-a,n-1], when SL PSCCH RSSI measurement is performed on transmission resources of each subchannel of the PSCCH in each slot within the measurement window;

SL PSSCH CBR: the ratio of subchannels with SL PSSCH RSSI measurement results above a threshold to the total number of subchannels within the measurement window [n-a,n-1], when SL PSSCH RSSI measurement is performed on transmission resources of each subchannel of the PSSCH in each slot within the measurement window,

where n and a represent slots, the value of a can be a=100, or a= $100 \cdot 2^\mu$, and the value of $\mu$ can be 0, 1, 2, or 3, with $\mu$=0, 1, 2, and 3 representing subcarrier spacings of 15kHz, 30kHz, 60kHz, and 120kHz, respectively. It should be noted that, the final channel busy rate SL CBR = X SL PRS CBR + Y SL PSCCH CBR + Z SL PSSCH CBR, where $0 \leq X \leq 1$, $0 \leq Y \leq 1$, $0 \leq Z \leq 1$, and X+Y+Z=1.

③ The terminal measures SL CR:

SL PRS CR: the ratio of the sum of the number of subchannels used by the UE to transmit the SL PRS within the measurement window [n-a,n-1] and the number of subchannels included in the sidelink grant obtained within the measurement window [n,n+b] to the total number of subchannels belonging to the dedicated resource pool within the measurement window [n-a,n+b];

SL PSCCH CR: the ratio of the sum of the number of subchannels used by the UE to transmit the PSCCH within the measurement window [n-a,n-1] and the number of subchannels included in the sidelink grant obtained within the measurement window [n,n+b] to the total number of subchannels belonging to the resource pool within the measurement window [n-a,n+b],

SL PSSCH CR: the ratio of the sum of the number of subchannels used by the UE to transmit the PSSCH within the measurement window [n-a,n-1] and the number of subchannels included in the sidelink grant obtained within the measurement window [n,n+b] to the total number of subchannels belonging to the resource pool within the measurement window [n-a,n+b],

where n, a and b represent slots, the values of a and b satisfy: a+b+1=1000 or a+b+1= $1000 \cdot 2^\mu$, and the value of $\mu$ can be 0, 1, 2, or 3, with $\mu$=0, 1, 2, and 3 representing subcarrier spacings of 15kHz, 30kHz, 60kHz, and 120kHz, respectively.

It should be noted that the final channel occupancy rate SL CR = X·SL PRS CR + Y·SL PSCCH CR + Z·SL PSSCH CR, where the values of X, Y, and Z are the same as those used in calculating SL CBR.

(3) The CBR measurement results are shared as coordination information among terminals.

In an out-of-coverage scenario:

Case 1: the SL CBR is measured by the transmission terminal, and the SL CBR measurement results are shared among each transmission terminal. Each transmission terminal determines the final channel quality parameter based on the SL CBR measured itself and the SL CBRs measured and shared by other transmission terminals except the transmission terminal itself. In some embodiments, this determination can be made using a weighted or extreme value.

Case 2: the SL CBR is measured by the reception terminal, which then shares the SL CBR measurement results with each transmission terminal. Each transmission terminal determines the final SL CBR based on the SL CBRs measured and shared by other reception terminals except the transmission terminal itself. In some embodiments, this determination can be made using a weighted or extreme value.

Case 3: both the transmission terminal and the reception terminal measure the SL CBR and share the SL CBR with a Server UE. The Server UE determines the final SL CBR based on the SL CBRs measured and shared by each transmission terminal and each reception terminal, and then transmits the final SL CBR to each transmission terminal and each reception terminal.

In an in-network coverage scenario, both the transmission terminal and the reception terminal measure the SL CBR and share the SL CBR with an LMF or gNB. The LMF or gNB determines the final SL CBR based on the SL CBRs measured and shared by each transmission terminal and each reception terminal, and then transmits the final SL CBR to each transmission terminal and each reception terminal. In some embodiments, this determination can be made using a weighted or extreme value.

Sharing coordination information (namely CBR measurement results) by multiple transmitting ends is beneficial for predicting the busyness of channels of the receiving end from the resource occupancy of the signals transmitted by multiple transmitting ends, adjusting the transmission parameters of the SL PRS based on the coordination information, improving the measurement accuracy of the SL PRS received by the receiving end, and ensuring the quality of positioning services.

(4) Multiple CBR level configurations are set by higher layer, and each CBR level configuration corresponds to multiple CBR levels. Different positioning priorities correspond to different CBR level configurations. The higher layer needs to additionally define the priority for positioning services.

The sidelink positioning already has priority information for communication services, which is second priority information and can be indicated by priority indication information 1. The higher layer additionally defines third priority information for positioning services, which can be indicated by priority indication information 2. In some embodiments, fourth priority information is additionally defined for communication services and positioning services, which can be indicated by priority indication information 3.

① it is determined that the positioning priority is the fourth priority information for communication services and positioning services based on priority indication information 3, and the transmission parameters of the SL PRS is adjusted based on the fourth priority information.

② The higher layer indication information can also be an independent Indiactor. For example, in case that Indiactor=1, the terminal or base station adjusts the transmission parameters of the SL PRS based on the second priority information or priority indication information 1. In case that Indiactor=0, the terminal or base station adjusts the transmission parameters of the SL PRS based on the third priority information or priority indication information 2.

(5) the transmission parameters of the SL PRS may be one or a combination of the following parameters:

① a transmission period for periodically transmitting the SL PRS;
② a number of OFDM symbols occupied by the SL PRS;
③ a transmission power or maximum transmission power for transmitting the SL PRS;
④ a CR limit;
⑤ a subchannel for transmitting the SL PRS; or
⑥ a resource pattern or resource identifier of the SL PRS.

In an out-of-network coverage scenario, the higher layer configures a two-dimensional table, which is configured for the transmission parameters of the SL PRS based on a SL CBR level and a positioning priority (corresponding to the first priority information and priority indication information 0). The terminal searches the two-dimensional table to adjust the transmission parameters of the SL-PRS.

In an in-network coverage scenario, the higher layer defines congestion thresholds x and y. A SL CBR being greater than x indicates high congestion, and a CBR being less than y indicates low congestion.

The network device adjusts one or more of the following transmission parameters of the SL PRS and notifies the transmission terminal, in case that there is high congestion or low congestion:

①a transmission period (if periodic positioning is used): In case that the congestion is high, the period is shortened. In case that the congestion is low, the period is extended;
②a number of OFDM symbols occupied by the SL-PRS: In case that the congestion is high, the number of OFDM symbols is reduced. In case that the congestion is low, the number of OFDM symbols is increased;
③a comb size: In case that the congestion is high, the comb size is increased. In case that the congestion is low, the comb size is decreased;
④a maximum transmission power/transmission power: In case that the congestion is high, the power is reduced. In case that the congestion is low, the power is increased;
⑤a resource pattern of the SL PRS: In case that the congestion is high, the resource pattern of the SL PRS that occupies less time and frequency resources is selected. In case that the congestion is low, the resource pattern of the SL PRS that occupies more time and frequency resources is selected. This can be achieved by configuring different resource identifiers or indexes of the SL PRS.

FIG. 6 is a schematic structural diagram of a terminal according to an embodiment of the present application. As shown in FIG. 6, the terminal includes a memory 601, a transceiver 602, and a processor 603.

The memory 601 is used for storing a computer program, and the transceiver 602 is used for transmitting and receiving data under control of the processor 603.

In some embodiments, the transceiver 602 is used for transmitting and receiving data under control of the processor 603.

In FIG. 6, the bus architecture may include any number of interconnected buses and bridges, which are linked together by various circuits such as one or more processors represented by the processor 603 and the memory represented by memory 601. The bus architecture may also link various other circuits such as peripheral devices, voltage regulators, and power management circuits, which are well known in the art and are therefore not further described herein. The bus interface provides an interface. The transceiver 602 may be a plurality of components, including a transmitter and a receiver, providing a unit for communicating with various other devices on a transmission medium, such as a wireless channel, a wired channel, an optical cable, or the like. For different user devices, the user interface 604 may also be an interface capable of connecting external or internal devices as required, and the connected devices include but are not limited to a keypad, a display, a speaker, a microphone, a joystick, or the like.

The processor 603 is responsible for managing the bus architecture and general processing, and the memory 601 can store data used by the processor 603 when performing operations.

In some embodiments, the processor 603 may be a central processing unit (CPU), an application specific integrated circuit (ASIC), a field programmable gate array (FPGA), or a complex programmable logic device (CPLD). The processor may also take the form of a multi-core architecture.

The processor calls the computer program stored in the memory, so as to execute any of the methods according to the embodiments of the present application according to the obtained executable instructions. The processor and the memory can also be arranged physically separately.

The processor 603 is used for reading the computer program in the memory 601 and performing following operation:
adjusting, based on a channel quality parameter and/or positioning priority of sidelink, transmission parameters of a sidelink positioning reference signal.

In some embodiments, the processor 603 is used for reading the computer program in the memory 601 and further performing following operation:
determining the channel quality parameter of the sidelink.

In some embodiments, determining the channel quality parameter of the sidelink includes:

determining, based on a channel quality parameter corresponding to the sidelink positioning reference signal, the channel quality parameter of the sidelink; or
determining, based on a channel quality parameter corresponding to the sidelink positioning reference signal and a channel quality parameter corresponding to other signals transmitted in a same slot as the sidelink positioning reference signal, the channel quality parameter of the sidelink.

In some embodiments, the other signals transmitted in the same slot as the sidelink positioning reference signal include one or more of:

a signal carried by physical sidelink control channel (PSCCH);

a signal carried by physical sidelink shared channel (PSSCH); or
a signal carried by physical sidelink feedback channel (PSFCH).

In some embodiments, determining the channel quality parameter of the sidelink includes:

determining, based on a channel quality parameter measured by the terminal itself and a channel quality parameter measured and shared by other terminals except the terminal itself, the channel quality parameter of the sidelink; determining, based on a channel quality parameter measured and shared by other terminals except the terminal itself, the channel quality parameter of the sidelink; or
receiving the channel quality parameter of the sidelink transmitted by a third-party device, where the channel quality parameter of the sidelink is determined based on a channel quality parameter measured and shared by each terminal.

In some embodiments, the processor 603 is used for reading the computer program in the memory 601 and further performing following operation:

determining the positioning priority,
where determining the positioning priority includes:

in case that a type of a resource pool used for sidelink positioning services is a dedicated resource pool, determining that the positioning priority is first priority information; or
in case that a type of a resource pool used for sidelink positioning services is a shared resource pool, determining that the positioning priority is second priority information for communication services, determining that the positioning priority is third priority information for positioning services, or determining that the positioning priority is fourth priority information for both communication services and positioning services.

In some embodiments, in case that the type of the resource pool is the shared resource pool, adjusting the transmission parameters of the sidelink positioning reference signal based on the positioning priority includes:

determining that the positioning priority is the fourth priority information, and adjusting the transmission parameters of the sidelink positioning reference signal based on the fourth priority information; or
determining that the positioning priority is the second priority information or the third priority information based on higher layer indication information, and adjusting the transmission parameters of the sidelink positioning reference signal based on the determined positioning priority.

In some embodiments, the channel quality parameter of the sidelink includes one or more of a channel busy rate (CBR), a channel occupancy rate (CR), or a sidelink received signal strength indicator (SL RSSI).
In some embodiments, the transmission parameters of the sidelink positioning reference signal include one or more of:

a resource pattern of the sidelink positioning reference signal;
a resource identifier of the sidelink positioning reference signal;
a transmission period for periodically transmitting the sidelink positioning reference signal;
a number of orthogonal frequency division multiplexing (OFDM) symbols occupied by the sidelink positioning reference signal;
a comb size corresponding to the sidelink positioning reference signal;
a transmission power or maximum transmission power for transmitting the sidelink positioning reference signal;
a CR limit; or
a subchannel for transmitting the sidelink positioning reference signal.

In some embodiments, in an out-of-coverage scenario, in case that the sum of CRs corresponding to positioning priorities with values from 1 to i is less than or equal to a CR corresponding to a positioning priority with a value of $k$, the CR limit is the CR corresponding to the positioning priority with the value of $k$, where the value of $i$ is less than or equal to the value of $k$.
In some embodiments, the CR limit satisfies the following calculation formula:

$$\sum_{i \leq k} CR(i) \leq CR_{limit}(k)$$

where $CR_{limit}(k)$ is the CR limit measured for a sidelink transmission with a positioning priority $k$ and a slot (n-N), $CR(i)$ is a CR corresponding to a sidelink transmission with a positioning priority i measured for a slot (n-N), n represents a slot or subframe, N is associated with a subcarrier spacing, and both n and N are integers.

In some embodiments, in an out-of-coverage scenario, adjusting the transmission parameters of the sidelink positioning reference signal includes:

determining a two-dimensional table configured for the transmission parameters, where the two-dimensional table is associated with a CBR level and the positioning priority; and
adjusting the transmission parameters of the sidelink positioning reference signal based on the two-dimensional table.

In some embodiments, in an in-coverage scenario, adjusting the transmission parameters of the sidelink positioning reference signal includes:

in case that a CBR is less than a first threshold value, or in case that a CBR is greater than a second threshold value, adjusting the transmission parameters of the sidelink positioning reference signal,
where the first threshold value is less than the second threshold value.

In some embodiments, the processor 603 is used for reading the computer program in the memory 601 and further performing following operation:
determining a subchannel for transmitting the sidelink positioning reference signal based on one or more of following parameters:

an index of a start physical resource block in physical resource blocks corresponding to resource units to which the sidelink positioning reference signal is mapped;
a number of consecutive physical resource blocks;
a comb size of the subchannel;
an offset of a resource unit; or
a bandwidth of the sidelink positioning reference signal.

In some embodiments, the subchannel includes resource units for transmitting the sidelink positioning reference signal, or the subchannel includes resource units for transmitting the sidelink positioning reference signal and blank resource units.

It should be noted here that the above-mentioned terminal according to the embodiment of the present application can implement all the method steps implemented by the above-mentioned method embodiment, and can achieve the same technical effect. The parts and beneficial effects of this embodiment that are the same as those of the method embodiment will not be described in detail here.

FIG. 7 is a schematic structural diagram of an apparatus for adjusting transmission parameters according to an embodiment of the present application. As shown in FIG. 7, the apparatus includes:
an adjustment unit 701, used for adjusting, based on a channel quality parameter and/or positioning priority of sidelink, transmission parameters of a sidelink positioning reference signal.

In some embodiments, the apparatus further includes:
a first determination unit, used for determining the channel quality parameter of the sidelink.

In some embodiments, the first determination unit is used for:

determining, based on a channel quality parameter corresponding to the sidelink positioning reference signal, the channel quality parameter of the sidelink; or
determining, based on a channel quality parameter corresponding to the sidelink positioning reference signal and a channel quality parameter corresponding to other signals transmitted in a same slot as the sidelink positioning reference signal, the channel quality parameter of the sidelink.

In some embodiments, the other signals transmitted in the same slot as the sidelink positioning reference signal include one or more of:

a signal carried by physical sidelink control channel (PSCCH);
a signal carried by physical sidelink shared channel (PSSCH); or
a signal carried by physical sidelink feedback channel (PSFCH).

In some embodiments, the first determination unit is used for:

determining, based on a channel quality parameter measured by the terminal itself and a channel quality parameter measured and shared by other terminals except the terminal itself, the channel quality parameter of the sidelink;
determining, based on a channel quality parameter measured and shared by other terminals except the terminal itself, the channel quality parameter of the sidelink; or
receiving the channel quality parameter of the sidelink transmitted by a third-party device, where the channel quality parameter of the sidelink is determined based on a channel quality parameter measured and shared by each terminal.

In some embodiments, the apparatus further includes:
a second determination unit, used for determining the positioning priority, where the second determination unit is used for:

in case that a type of a resource pool used for sidelink positioning services is a dedicated resource pool, determining that the positioning priority is first priority information; or
in case that a type of a resource pool used for sidelink positioning services is a shared resource pool, determining that the positioning priority is second priority information for communication services, determining that the positioning priority is third priority information for positioning services, or determining that the positioning priority is fourth priority information for both communication services and positioning services.

In some embodiments, in case that the type of the resource pool is the shared resource pool, adjusting the transmission parameters of the sidelink positioning reference signal based on the positioning priority includes:

determining that the positioning priority is the fourth priority information, and adjusting the transmission parameters of the sidelink positioning reference signal based on the fourth priority information; or
determining that the positioning priority is the second priority information or the third priority information based on higher layer indication information, and adjusting the transmission parameters of the sidelink positioning reference signal based on the determined positioning priority.

In some embodiments, the channel quality parameter of the sidelink includes one or more of a channel busy rate (CBR), a channel occupancy rate (CR), or a sidelink received signal strength indicator (SL RSSI).
In some embodiments, the transmission parameters of the sidelink positioning reference signal include one or more of:

a resource pattern of the sidelink positioning reference signal;
a resource identifier of the sidelink positioning reference signal;
a transmission period for periodically transmitting the sidelink positioning reference signal;
a number of orthogonal frequency division multiplexing (OFDM) symbols occupied by the sidelink positioning reference signal;
a comb size corresponding to the sidelink positioning reference signal;
a transmission power or maximum transmission power for transmitting the sidelink positioning reference signal;
a CR limit; or
a subchannel for transmitting the sidelink positioning reference signal.

In some embodiments, in an out-of-coverage scenario, in case that the sum of CRs corresponding to positioning priorities with values from 1 to i is less than or equal to a CR corresponding to a positioning priority with a value of $k$, the CR limit is the CR corresponding to the positioning priority with the value of $k$, where the value of $i$ is less than or equal to the value of $k$.
In some embodiments, the CR limit satisfies the following calculation formula:

$$\sum_{i \le k} CR(i) \le CR_{limit}(k)$$

where $CR_{limit}(k)$ is the CR limit measured for a sidelink transmission with a positioning priority $k$ and a slot (n-N), $CR(i)$ is a CR corresponding to a sidelink transmission with a positioning priority i measured for a slot (n-N), n represents a slot or subframe, N is associated with a subcarrier spacing, and both n and N are integers.
In some embodiments, in an out-of-coverage scenario, the adjustment unit 701 is used for:

determining a two-dimensional table configured for the transmission parameters, where the two-dimensional table is associated with a CBR level and the positioning priority; and

adjusting the transmission parameters of the sidelink positioning reference signal based on the two-dimensional table.

In some embodiments, in an in-coverage scenario, the adjustment unit 701 is used for:

in case that a CBR is less than a first threshold value, or in case that a CBR is greater than a second threshold value, adjusting the transmission parameters of the sidelink positioning reference signal,

where the first threshold value is less than the second threshold value.

In some embodiments, the apparatus further includes:

a third determination unit, used for determining a subchannel for transmitting the sidelink positioning reference signal based on one or more of following parameters:

an index of a start physical resource block in physical resource blocks corresponding to resource units to which the sidelink positioning reference signal is mapped;

a number of consecutive physical resource blocks;

a comb size of the subchannel;

an offset of a resource unit; or

a bandwidth of the sidelink positioning reference signal.

In some embodiments, the subchannel includes resource units for transmitting the sidelink positioning reference signal, or the subchannel includes resource units for transmitting the sidelink positioning reference signal and blank resource units.

The method and the apparatus according to various embodiments of the application are based on the same application concept. Since the principles of solving problems by the method and the apparatus are similar, the implementation of the apparatus and the method can refer to each other, and the repeated parts will not be repeated.

It should be noted that the division of units in the embodiments of the present application is schematic and is merely a logical functional division. In actual implementation, other division methods may be used. Furthermore, the functional units in the various embodiments of the present application may be integrated into a single processing unit, or each unit may exist physically separately, or two or more units may be integrated into a single unit. The above-mentioned integrated units may be implemented in the form of hardware or software functional units.

when the integrated unit is implemented in the form of a software functional unit and sold or used as an independent product, it can be stored in a processor-readable storage medium. Based on this understanding, the solution of the present application in nature, or the part that contributes to the prior art, or all or part of the solution can be embodied in the form of a software product. The computer software product is stored in a storage medium and includes a number of instructions for enabling a computer device (which can be a personal computer, server, or network device, etc.) or a processor to execute all or part of the steps of the method described in each embodiment of the present application. The aforementioned storage medium includes an U disk, a mobile hard disk, a read-only memory (ROM), a random access memory (RAM), a disk, an optical disk, or another media that can store program codes.

It should be noted here that the above-mentioned apparatus according to the embodiment of the present application can implement all the method steps implemented by the above-mentioned method embodiment, and can achieve the same technical effect. The parts and beneficial effects of this embodiment that are the same as those of the method embodiment will not be described in detail here.

In another aspect, an embodiment of the present application further provides a processor-readable storage medium storing a computer program, where the computer program is used for causing a processor to execute the method for adjusting transmission parameters according to various embodiments above, including:

adjusting, based on a channel quality parameter and/or positioning priority of sidelink, transmission parameters of a sidelink positioning reference signal.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as CDs, DVDs, BDs, HVDs, etc.), and semiconductor storage (such as ROMs, EPROMs, EEPROMs, nonvolatile memories (NAND FLASH), solid-state drives (SSDs)), etc.

Those skilled in the art will appreciate that the embodiments of the present application may be provided as methods, systems, or computer program products. Thus, the present application may take the form of an entirely hardware embodiment, an entirely software embodiment, or an embodiment combining software and hardware. Furthermore, the present application may take the form of a computer program product implemented on one or more computer-usable storage media (including but not limited to magnetic disk storage and optical storage) containing computer-usable program code.

The present application is described with reference to flowcharts and/or block diagrams of methods, devices (systems), and computer program products according to the embodiments of the present application. It should be understood that, each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction apparatus that implements the functions specified in one or more processes in the flowchart and/or one or more blocks in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

Apparently, those skilled in the art may make various changes and modifications to the present application without departing from the spirit and scope of the present application. Thus, if these modifications and variations of the present application fall within the scope of the claims of the present application and their equivalents, the present application is intended to include these modifications and variations.

**Claims**

1. A method for adjusting transmission parameters, performed by a terminal, comprising:
   adjusting, based on a channel quality parameter and/or positioning priority of sidelink, transmission parameters of a sidelink positioning reference signal.

2. The method of claim 1, further comprising:
   determining the channel quality parameter of the sidelink.

3. The method of claim 2, wherein determining the channel quality parameter of the sidelink comprises:

   determining, based on a channel quality parameter corresponding to the sidelink positioning reference signal, the channel quality parameter of the sidelink; or
   determining, based on a channel quality parameter corresponding to the sidelink positioning reference signal and a channel quality parameter corresponding to other signals transmitted in a same slot as the sidelink positioning reference signal, the channel quality parameter of the sidelink.

4. The method of claim 3, wherein the other signals transmitted in the same slot as the sidelink positioning reference signal comprise one or more of:

   a signal carried by physical sidelink control channel (PSCCH);
   a signal carried by physical sidelink shared channel (PSSCH); or
   a signal carried by physical sidelink feedback channel (PSFCH).

5. The method of claim 2, wherein determining the channel quality parameter of the sidelink comprises:

   determining, based on a channel quality parameter measured by the terminal itself and a channel quality parameter measured and shared by other terminals except the terminal itself, the channel quality parameter of the sidelink;
   determining, based on a channel quality parameter measured and shared by other terminals except the terminal itself, the channel quality parameter of the sidelink; or
   receiving the channel quality parameter of the sidelink transmitted by a third-party device, wherein the channel quality parameter of the sidelink is determined based on a channel quality parameter measured and shared by each terminal.

6. The method of claim 1, further comprising:

determining the positioning priority,
wherein determining the positioning priority comprises:

in case that a type of a resource pool used for sidelink positioning services is a dedicated resource pool, determining that the positioning priority is first priority information; or
in case that a type of a resource pool used for sidelink positioning services is a shared resource pool, determining that the positioning priority is second priority information for communication services, determining that the positioning priority is third priority information for positioning services, or determining that the positioning priority is fourth priority information for both communication services and positioning services.

7. The method of claim 6, wherein in case that the type of the resource pool is the shared resource pool, adjusting the transmission parameters of the sidelink positioning reference signal based on the positioning priority comprises:

determining that the positioning priority is the fourth priority information, and adjusting the transmission parameters of the sidelink positioning reference signal based on the fourth priority information; or
determining that the positioning priority is the second priority information or the third priority information based on higher layer indication information, and adjusting the transmission parameters of the sidelink positioning reference signal based on the determined positioning priority.

8. The method of claim 1, wherein the channel quality parameter of the sidelink comprises one or more of a channel busy rate (CBR), a channel occupancy rate (CR), or a sidelink received signal strength indicator (SL RSSI).

9. The method of claim 1, wherein the transmission parameters of the sidelink positioning reference signal comprise one or more of:

a resource pattern of the sidelink positioning reference signal;
a resource identifier of the sidelink positioning reference signal;
a transmission period for periodically transmitting the sidelink positioning reference signal;
a number of orthogonal frequency division multiplexing (OFDM) symbols occupied by the sidelink positioning reference signal;
a comb size corresponding to the sidelink positioning reference signal;
a transmission power or maximum transmission power for transmitting the sidelink positioning reference signal;
a CR limit; or
a subchannel for transmitting the sidelink positioning reference signal.

10. The method of claim 9, wherein in an out-of-coverage scenario, in case that a sum of CRs corresponding to positioning priorities with values from 1 to i is less than or equal to a CR corresponding to a positioning priority with a value of $k$, the CR limit is the CR corresponding to the positioning priority with the value of $k$, wherein the value of $i$ is less than or equal to the value of $k$.

11. The method of claim 10, wherein the CR limit satisfies following calculation formula:

$$\sum_{i \leq k} CR(i) \leq CR_{limit}(k)$$

wherein $CR_{limit}(k)$ is the CR limit measured for a sidelink transmission with a positioning priority $k$ and a slot (n-N), $CR(i)$ is a CR corresponding to a sidelink transmission with a positioning priority i measured for a slot (n-N), n represents a slot or subframe, N is associated with a subcarrier spacing, and both n and N are integers.

12. The method of claim 1, wherein in an out-of-coverage scenario, adjusting the transmission parameters of the sidelink positioning reference signal comprises:

determining a two-dimensional table configured for the transmission parameters, wherein the two-dimensional table is associated with a CBR level and the positioning priority; and

adjusting the transmission parameters of the sidelink positioning reference signal based on the two-dimensional table.

13. The method of claim 1, wherein in an in-coverage scenario, adjusting the transmission parameters of the sidelink positioning reference signal comprises:

in case that a CBR is less than a first threshold value, or in case that a CBR is greater than a second threshold value, adjusting the transmission parameters of the sidelink positioning reference signal,

wherein the first threshold value is less than the second threshold value.

14. The method of claim 1 or 9, further comprising:
determining a subchannel for transmitting the sidelink positioning reference signal based on one or more of following parameters:

an index of a start physical resource block in physical resource blocks corresponding to resource units to which the sidelink positioning reference signal is mapped;

a number of consecutive physical resource blocks;

a comb size of the subchannel;

an offset of a resource unit; or

a bandwidth of the sidelink positioning reference signal.

15. The method of claim 14, wherein the subchannel comprises resource units for transmitting the sidelink positioning reference signal, or the subchannel comprises resource units for transmitting the sidelink positioning reference signal and blank resource units.

16. A terminal, comprising a memory, a transceiver, and a processor,
wherein the memory is used for storing a computer program, the transceiver is used for transmitting and receiving data under control of the processor, and the processor is used for reading the computer program in the memory and performing following operation:
adjusting, based on a channel quality parameter and/or positioning priority of sidelink, transmission parameters of a sidelink positioning reference signal.

17. The terminal of claim 16, wherein the processor reads the computer program in the memory and further performs following operation:
determining the channel quality parameter of the sidelink.

18. The terminal of claim 17, wherein determining the channel quality parameter of the sidelink comprises:

determining, based on a channel quality parameter corresponding to the sidelink positioning reference signal, the channel quality parameter of the sidelink; or

determining, based on a channel quality parameter corresponding to the sidelink positioning reference signal and a channel quality parameter corresponding to other signals transmitted in a same slot as the sidelink positioning reference signal, the channel quality parameter of the sidelink.

19. The terminal of claim 18, wherein the other signals transmitted in the same slot as the sidelink positioning reference signal comprise one or more of:

a signal carried by physical sidelink control channel (PSCCH);

a signal carried by physical sidelink shared channel (PSSCH); or

a signal carried by physical sidelink feedback channel (PSFCH).

20. The terminal of claim 17, wherein determining the channel quality parameter of the sidelink comprises:

determining, based on a channel quality parameter measured by the terminal itself and a channel quality parameter measured and shared by other terminals except the terminal itself, the channel quality parameter of the sidelink;

determining, based on a channel quality parameter measured and shared by other terminals except the terminal itself, the channel quality parameter of the sidelink; or

receiving the channel quality parameter of the sidelink transmitted by a third-party device, wherein the channel quality parameter of the sidelink is determined based on a channel quality parameter measured and shared by each terminal.

21. The terminal of claim 16, wherein the processor reads the computer program in the memory and further performs following operation:

determining the positioning priority,
wherein determining the positioning priority comprises:

in case that a type of a resource pool used for sidelink positioning services is a dedicated resource pool, determining that the positioning priority is first priority information; or

in case that a type of a resource pool used for sidelink positioning services is a shared resource pool, determining that the positioning priority is second priority information for communication services, determining that the positioning priority is third priority information for positioning services, or determining that the positioning priority is fourth priority information for both communication services and positioning services.

22. The terminal of claim 21, wherein in case that the type of the resource pool is the shared resource pool, adjusting the transmission parameters of the sidelink positioning reference signal based on the positioning priority comprises:

determining that the positioning priority is the fourth priority information, and adjusting the transmission parameters of the sidelink positioning reference signal based on the fourth priority information; or

determining that the positioning priority is the second priority information or the third priority information based on higher layer indication information, and adjusting the transmission parameters of the sidelink positioning reference signal based on the determined positioning priority.

23. The terminal of claim 16, wherein the channel quality parameter of the sidelink comprises one or more of a channel busy rate (CBR), a channel occupancy rate (CR), or a sidelink received signal strength indicator (SL RSSI).

24. The terminal of claim 16, wherein the transmission parameters of the sidelink positioning reference signal comprise one or more of:

a resource pattern of the sidelink positioning reference signal;
a resource identifier of the sidelink positioning reference signal;
a transmission period for periodically transmitting the sidelink positioning reference signal;
a number of orthogonal frequency division multiplexing (OFDM) symbols occupied by the sidelink positioning reference signal;
a comb size corresponding to the sidelink positioning reference signal;
a transmission power or maximum transmission power for transmitting the sidelink positioning reference signal;
a CR limit; or
a subchannel for transmitting the sidelink positioning reference signal.

25. The terminal of claim 24, wherein in an out-of-coverage scenario, in case that a sum of CRs corresponding to positioning priorities with values from 1 to i is less than or equal to a CR corresponding to a positioning priority with a value of $k$, the CR limit is the CR corresponding to the positioning priority with the value of $k$, wherein the value of $i$ is less than or equal to the value of $k$.

26. The terminal of claim 25, wherein the CR limit satisfies following calculation formula:

$$\sum_{i \leq k} CR(i) \leq CR_{limit}(k)$$

wherein $CR_{limit}(k)$ is the CR limit measured for a sidelink transmission with a positioning priority $k$ and a slot (n-N), $CR(i)$ is a CR corresponding to a sidelink transmission with a positioning priority i measured for a slot (n-N), n represents a slot or subframe, N is associated with a subcarrier spacing, and both n and N are integers.

27. The terminal of claim 16, wherein in an out-of-coverage scenario, adjusting the transmission parameters of the sidelink positioning reference signal comprises:

determining a two-dimensional table configured for the transmission parameters, wherein the two-dimensional table is associated with a CBR level and the positioning priority; and
adjusting the transmission parameters of the sidelink positioning reference signal based on the two-dimensional table.

28. The terminal of claim 16, wherein in an in-coverage scenario, adjusting the transmission parameters of the sidelink positioning reference signal comprises:

in case that a CBR is less than a first threshold value, or in case that a CBR is greater than a second threshold value, adjusting the transmission parameters of the sidelink positioning reference signal,
wherein the first threshold value is less than the second threshold value.

29. The terminal of claim 16 or 24, wherein the processor reads the computer program in the memory and further performs following operation:
determining a subchannel for transmitting the sidelink positioning reference signal based on one or more of following parameters:

an index of a start physical resource block in physical resource blocks corresponding to resource units to which the sidelink positioning reference signal is mapped;
a number of consecutive physical resource blocks;
a comb size of the subchannel;
an offset of a resource unit; or
a bandwidth of the sidelink positioning reference signal.

30. The terminal of claim 29, wherein the subchannel comprises resource units for transmitting the sidelink positioning reference signal, or the subchannel comprises resource units for transmitting the sidelink positioning reference signal and blank resource units.

31. An apparatus for adjusting transmission parameters, comprising:
an adjustment unit, used for adjusting, based on a channel quality parameter and/or positioning priority of sidelink, transmission parameters of a sidelink positioning reference signal.

32. The apparatus of claim 31, further comprising a first determination unit, wherein the first determination unit is used for determining the channel quality parameter of the sidelink.

33. The apparatus of claim 32, wherein the first determination unit is used for:

determining, based on a channel quality parameter corresponding to the sidelink positioning reference signal, the channel quality parameter of the sidelink; or
determining, based on a channel quality parameter corresponding to the sidelink positioning reference signal and a channel quality parameter corresponding to other signals transmitted in a same slot as the sidelink positioning reference signal, the channel quality parameter of the sidelink.

34. The apparatus of claim 33, wherein the other signals transmitted in the same slot as the sidelink positioning reference signal comprise one or more of:

a signal carried by physical sidelink control channel (PSCCH);
a signal carried by physical sidelink shared channel (PSSCH); or
a signal carried by physical sidelink feedback channel (PSFCH).

35. The apparatus of claim 32, wherein the first determination unit is used for:

determining, based on a channel quality parameter measured by a terminal itself and a channel quality parameter measured and shared by other terminals except the terminal itself, the channel quality parameter of the sidelink;
determining, based on a channel quality parameter measured and shared by other terminals except a terminal itself, the channel quality parameter of the sidelink; or

receiving the channel quality parameter of the sidelink transmitted by a third-party device, wherein the channel quality parameter of the sidelink is determined based on a channel quality parameter measured and shared by each terminal.

36. The apparatus of claim 31, further comprising:

a second determination unit, used for determining the positioning priority,
wherein the second determination unit is used for:

in case that a type of a resource pool used for sidelink positioning services is a dedicated resource pool, determining that the positioning priority is first priority information; or
in case that a type of a resource pool used for sidelink positioning services is a shared resource pool, determining that the positioning priority is second priority information for communication services, determining that the positioning priority is third priority information for positioning services, or determining that the positioning priority is fourth priority information for both communication services and positioning services.

37. The apparatus of claim 36, wherein in case that the type of the resource pool is the shared resource pool, the second determination unit is used for:

determining that the positioning priority is the fourth priority information, and adjusting the transmission parameters of the sidelink positioning reference signal based on the fourth priority information; or
determining that the positioning priority is the second priority information or the third priority information based on higher layer indication information, and adjusting the transmission parameters of the sidelink positioning reference signal based on the determined positioning priority.

38. The apparatus of claim 31, wherein the channel quality parameter of the sidelink comprises one or more of a channel busy rate (CBR), a channel occupancy rate (CR), or a sidelink received signal strength indicator (SL RSSI).

39. The apparatus of claim 31, wherein the transmission parameters of the sidelink positioning reference signal comprise one or more of:

a resource pattern of the sidelink positioning reference signal;
a resource identifier of the sidelink positioning reference signal;
a transmission period for periodically transmitting the sidelink positioning reference signal;
a number of orthogonal frequency division multiplexing (OFDM) symbols occupied by the sidelink positioning reference signal;
a comb size corresponding to the sidelink positioning reference signal;
a transmission power or maximum transmission power for transmitting the sidelink positioning reference signal;
a CR limit; or
a subchannel for transmitting the sidelink positioning reference signal.

40. The apparatus of claim 39, wherein in an out-of-coverage scenario, in case that a sum of CRs corresponding to positioning priorities with values from 1 to i is less than or equal to a CR corresponding to a positioning priority with a value of $k$, the CR limit is the CR corresponding to the positioning priority with the value of $k$, wherein the value of $i$ is less than or equal to the value of $k$.

41. The apparatus of claim 40, wherein the CR limit satisfies following calculation formula:

$$\sum_{i \leq k} CR(i) \leq CR_{limit}(k)$$

wherein $CR_{limit}(k)$ is the CR limit measured for a sidelink transmission with a positioning priority $k$ and a slot (n-N), $CR(i)$ is a CR corresponding to a sidelink transmission with a positioning priority $i$ measured for a slot (n-N), n represents a slot or subframe, N is associated with a subcarrier spacing, and both n and N are integers.

42. The apparatus of claim 31, wherein in an out-of-coverage scenario, the adjustment unit is used for:

determining a two-dimensional table configured for the transmission parameters, wherein the two-dimensional table is associated with a CBR level and the positioning priority; and

adjusting the transmission parameters of the sidelink positioning reference signal based on the two-dimensional table.

43. The apparatus of claim 31, wherein in an in-coverage scenario, the adjustment unit is used for:

in case that a CBR is less than a first threshold value, or in case that a CBR is greater than a second threshold value, adjusting the transmission parameters of the sidelink positioning reference signal, wherein the first threshold value is less than the second threshold value.

44. The apparatus of claim 31 or 39, further comprising:
a third determination unit, used for determining a subchannel for transmitting the sidelink positioning reference signal based on one or more of following parameters:

an index of a start physical resource block in physical resource blocks corresponding to resource units to which the sidelink positioning reference signal is mapped;
a number of consecutive physical resource blocks;
a comb size of the subchannel;
an offset of a resource unit; or
a bandwidth of the sidelink positioning reference signal.

45. The apparatus of claim 44, wherein the subchannel comprises resource units for transmitting the sidelink positioning reference signal, or the subchannel comprises resource units for transmitting the sidelink positioning reference signal and blank resource units.

46. A non-transitory readable storage medium storing a computer program, wherein the computer program is used for causing a computer to execute the method for adjusting transmission parameters of any of claims 1 to 15.

sub-channel

PSCCH1

RE

PSSCH1

PSSCH1

SL PRS

PSSCH1

FIG. 1

Adjusting, based on a channel quality parameter and/or positioning priority of sidelink, transmission parameters of a sidelink positioning reference signal.

201

FIG. 2

FIG. 3

FIG. 4

| CBR level configuration 2 | → CBR level 4 → CBR level 5 → CBR level 6 | Transmission parameters of a SL PRS ConfigurationZ+1 | Transmission parameters of a SL PRS ConfigurationZ+2 | å | Transmission parameters of a SL PRS Configuration... |
| CBR level configuration 1 | → CBR level 1 → CBR level 2 → CBR level 3 | Transmission parameters of a SL PRS Configuration1 | Transmission parameters of a SL PRS Configuration2 | å | Transmission parameters of a SL PRS ConfigurationZ |
| | | Priority000 | Priority001 | | Priority111 |

FIG. 5

Processor 603

Memory 601

Bus interface

Transceiver 602

User interface 604

FIG. 6

Adjustment unit 701

FIG. 7

## INTERNATIONAL SEARCH REPORT

| | International application No. |
|---|---|
| | **PCT/CN2024/092963** |

**A. CLASSIFICATION OF SUBJECT MATTER**

H04W 72/40(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; ENTXT; ENTXTC; VEN; DWPI; CNKI; 3GPP: 参数, 直通链路, 侧行链路, 侧链路, 副链路, 信道, 质量, 定位, 优先级, 调整, 变更, 更改, 改变, 参考信号, 信道繁忙率, 信道占用率, 接收信号强度指示, 传输周期, 资源, 功率, parameter, sidelink, channel, quality, position, priority, adjust, update, change, reference signal, PRS, S-PRS, SL-PRS, CBR, CR, RSSI, transmission period, resource, power

**C. DOCUMENTS CONSIDERED TO BE RELEVANT**

| Category* | Citation of document, with indication, where appropriate, of the relevant passages | Relevant to claim No. |
|---|---|---|
| X | CN 115866741 A (VIVO COMMUNICATION TECHNOLOGY CO., LTD.) 28 March 2023 (2023-03-28)<br>paragraphs [0024]-[0667] | 1-46 |
| A | CN 111314880 A (GUANGDONG OPPO MOBILE COMMUNICATIONS CO., LTD.) 19 June 2020 (2020-06-19)<br>entire document | 1-46 |
| A | CN 115706627 A (CITIC KEZHILIAN TECHNOLOGY CO., LTD.) 17 February 2023 (2023-02-17)<br>entire document | 1-46 |
| A | US 2022217728 A1 (LG ELECTRONICS INC.) 07 July 2022 (2022-07-07)<br>entire document | 1-46 |
| A | VIVO. "Discussion on resource allocation for SL positioning reference signal"<br>*3GPP TSG RAN WG1 #112, R1- 2300459*, 03 March 2023 (2023-03-03),<br>entire document | 1-46 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 August 2024** | **15 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/092963**

| Patent document cited in search report | | | Publication date (day/month/year) | Patent family member(s) | | | Publication date (day/month/year) |
|---|---|---|---|---|---|---|---|
| CN | 115866741 | A | 28 March 2023 | WO | 2023046053 | A1 | 30 March 2023 |
| CN | 111314880 | A | 19 June 2020 | ZA | 201908250 | B | 25 November 2020 |
| | | | | CA | 3066669 | A1 | 09 May 2019 |
| | | | | EP | 4138473 | A1 | 22 February 2023 |
| | | | | PH | 12019502706 | A1 | 07 December 2020 |
| | | | | SG | 11201911604 | PA | 30 January 2020 |
| | | | | EP | 3624517 | A1 | 18 March 2020 |
| | | | | AU | 2017438196 | A1 | 16 January 2020 |
| | | | | US | 2020195371 | A1 | 18 June 2020 |
| | | | | RU | 2742794 | C1 | 10 February 2021 |
| | | | | US | 2020260321 | A1 | 13 August 2020 |
| | | | | IL | 271337 | A | 30 January 2020 |
| | | | | KR | 20200083968 | A | 09 July 2020 |
| | | | | JP | 2021503192 | A | 04 February 2021 |
| | | | | BR | 112019027825 | A2 | 07 July 2020 |
| | | | | WO | 2019084931 | A1 | 09 May 2019 |
| | | | | CN | 110754122 | A | 04 February 2020 |
| CN | 115706627 | A | 17 February 2023 | US | 2024179667 | A1 | 30 May 2024 |
| | | | | WO | 2023011347 | A1 | 09 February 2023 |
| | | | | EP | 4358455 | A1 | 24 April 2024 |
| | | | | JP | 2024525971 | A | 12 July 2024 |
| | | | | KR | 20240032066 | A | 08 March 2024 |
| US | 2022217728 | A1 | 07 July 2022 | WO | 2020231126 | A1 | 19 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310546868